# EUROPEAN PATENT SPECIFICATION

(11) **EP 1 910 101 B1**
(45) Date of publication and mention of the grant of the patent: **09.12.2009**
(21) Application number: 05762124.5
(22) Date of filing: 01.07.2005
(51) Int. Cl.: B60C 1/00, C08L 9/00, C08L 23/22, B29D 30/06, C08G 75/14

(54) **PROCESS FOR MANUFACTURING TIRES**
VERFAHREN ZUR HERSTELLUNG VON REIFEN
PROCÉDÉ DE FABRICATION DE PNEUS

(43) Date of publication of application: 16.04.2008
(73) Proprietor: PIRELLI TYRE S.p.A., 20126 Milano (IT)
(72) Inventor: BAIONE, Francesca, I-20126 Milano (IT); FINO, Luigi, I-20126 Milano (IT); GALIMBERTI, Maurizio, I-20126 Milano (IT); GIANNINI, Luca, I-20126 Milano (IT); CITTERIO, Attilio, I-20131 Milano (IT); MARTINO, Marco, I-84129 Salerno (IT)
(74) Representative: Longoni, Alessandra
(86) International application number: PCT/EP2005/007097
(87) International publication number: WO 2007/003209

(56) References cited:
- EP-A- 1 081 134
- WO-A-02/45942
- GB-A- 1 359 062
- US-A- 3 769 122
- US-A1- 2004 030 036
- US-A1- 2004 092 648
- PATENT ABSTRACTS OF JAPAN vol. 2003, no. 12, 5 December 2003 (2003-12-05) -& JP 2003 292673 A (YOKOHAMA RUBBER CO LTD:THE), 15 October 2003 (2003-10-15)

## Description

The present invention relates to a process for manufacturing tires.

More particularly, the present invention relates to a process for manufacturing tires which involves the introduction of a fluid under pressure directly in contact with the green tire, that is to say in the absence of a curing bladder.

Moreover the present invention, also relates to a tire comprising at least one layer including a crosslinked elastomeric material, said crosslinked elastomeric material being obtained by crosslinking a crosslinkable elastomeric composition comprising at least one polythiopolycarboxylic acid or a derivative thereof.

Furthermore, the present invention also relates to a crosslinkable elastomeric composition comprising at least one polythiopolycarboxylic acid or a derivative thereof, as well as to a crosslinked manufactured article obtained by crosslinking said crosslinkable elastomeric composition.

In a cycle for tire production it is provided that, subsequently to a manufacturing process in which the various structural elements of the tire are made and assembled, a moulding and curing process intended to stabilize the structure of the tire in a desired geometrical configuration, normally characterized by a particular tread band pattern, is carried out. For this purpose, the green tire is enclosed in a moulding cavity defined within a vulcanization mould and shaped according to the configuration of the outer surface of the tire to be obtained.

For the purpose of the present invention and of the claims which follow, the term "green tire" means the product obtained after the manufacturing step, in which are assembled the various structural elements of the tire and the elastomeric material is not yet vulcanized. The term "outer surface" means the visible surface of the tire once this tire has been mounted on the rim of the wheel, while the term "inner surface" means the surface of the tire which is in contact with the fluid for inflating the tire.

Curing methods are known in which steam or another fluid under pressure is introduced directly into the tire enclosed in the moulding cavity, in the absence of a curing bladder. However, said methods, in which there is direct contact between the green tire and the fluid under pressure, may lead to numerous drawbacks owing to the permeation of the fluid itself into the structure of the tire which has not yet been vulcanized.

In particular, the most critical step, with regard to the diffusion of the fluid under pressure into the structure of the tire which has not yet been vulcanized, is that one corresponding to the initial moments of the introduction of said fluid under pressure directly into the tire enclosed in the moulding cavity, that is to say when the degree of crosslinking of the elastomeric material of which the tire is made is substantially zero or at any rate very low. As a matter of fact, the permeation of the fluid under pressure may lead, for example, to delamination between the adjacent blend layers, may have a negative impact on the adhesion processes between the elastomeric material and the metallic or textile reinforcing structures, or may even promote corrosion of the metallic reinforcing materials.

A number of solutions have been proposed in order to overcome the abovementioned drawbacks.

For example, German Patent DE 355 909 discloses a process for manufacturing tires in which a liquid under pressure is placed directly in contact with the inner surface of the tire before or during vulcanization, characterized in that, before vulcanization, an inner layer of the tire is treated so that it becomes impermeable to said liquid. Said treatment is carried out by partial vulcanization of the layer(s) which form(s) the abovementioned inner layer, before or after the other layers which form the tire are superimposed. The elastomeric composition of said inner layer is not described.

United States Patent US 2,795,262 discloses a method for preparing a tire carcass which involves applying to the inner surface of said non-vulcanized carcass a continuous film based on an elastomeric silicone polymer so as to prevent direct contact of the fluid under pressure with the carcass which has not yet been vulcanized.

British Patent GB 397,508 discloses a method for producing tires in which a coating is applied to the inner surface of the green tire by spraying, this coating comprising an adhesive or gelatin, glycerol or polyglycerol, water, phenol and alcohol so as to prevent direct contact of the fluid under pressure with the carcass.

United States Patent US 3,769,122 discloses a method for preparing the innerliner of a tubeless tire, which involves applying an elastomeric material to the inner surface of the carcass of said tire, by spraying, this elastomeric material essentially comprising 85%-100%, preferably 95%-100%, even more preferably 100%, of a halobutyl or butyl rubber or mixtures thereof. Said application can be carried out before or after moulding and curing the tire and the elastomeric material applied is then cured at ambient temperature or at moderately elevated temperatures. For the purpose of increasing the rate of curing, an ultra-accelerator such as, for example, para-quinone dioxime is added. If the application takes place before the curing of the tire, the curing, total or partial, of said innerliner would make it possible to obtain a barrier to the fluid under pressure, so as to prevent direct contact of this fluid under pressure with the carcass.

United States Patent US 4,221,253 discloses a process for producing tires in which the inner surface of the tire is partially or totally vulcanized by irradiation with electrons. Said treatment would make it possible to obtain a barrier to the fluid under pressure, so as to prevent direct contact of this fluid under pressure with the carcass.

European Patent Application EP 976, 534 in the name of the Applicant discloses a process for manufacturing a tire which includes a step of treating the inner surface of the green tire so as to prevent the permeation of the fluid under pressure into the structure of the tire: said treatment may be carried out by combining at least one layer made of pre-vulcanized elastomeric material with the inner surface of the green tire. For the purpose of increasing the rate of vulcanization and/or reducing the temperature required to obtain a sufficient degree of pre-vulcanization, a nitrogen-containing co-accelerator selected, for example, from: N-cyclohexyl-N-ethylamine, diphenylguanidine, and the like, may be advantageously added to the vulcanization accelerators normally used, in an amount of from 2 phr to 15 phr, preferably of from 5 phr to 10 phr.

International Patent Application WO 02/45942 in the name of the Applicant discloses a process for manufacturing, moulding and curing tires, said process comprising the step of forming at least one coating layer made of crosslinkable elastomeric material on an outer surface of a toroidal support the shape of which substantially matches that of the inner surface of the tire, wherein said layer of Crosslinkable elastomeric material comprises at least one elastomer containing hydrolysable silane groups. The use of the abovementioned elastomer containing hydrolysable silane groups is said to be capable of increasing the rate of crosslinking of said elastomeric material and thus makes it possible to avoid the use of co-accelerators or of large amounts of vulcanization accelerators, and to avoid special treatments of the inner surface of the tire.

European Patent Application EP 1 081 134 discloses a process for the preparation of polythiopolycarboxylic acids with a relatively high content of bonded sulphur in a high purity.

Japanese Patent Application JP2003292673 discloses a rubber composition constituting a rubber member arranged adjacent to a rubber for covering a steel cord, having improved processability, while keeping adhesive properties. The rubber composition comprises 100 pts.wt of a sulphur-vulcanizable diene based rubber containing 20-100pts.wt of a natural rubber, 20-100 pts.wt of carbon black and/ or silica and 1-20 pts.wt of a sulphur based extreme pressure additive selected from the group consisting of a polythiohydrocarbon, a polythiofatty acid, a polythiofatty acid ester and polythio-fats and oils.

United States Patent Application US2004/030036 discloses an elastomeric composition of a halogenated rubber component, a filler, and polybutene processing oil, the processing oil having a number average molecular weight of least 400, and less than 10,000. The rubber component can be a halogenated butyl rubber or a halogenated star-branched butyl rubber. The polybutene processing oil is present in the composition from 2 to 30 phr, while the halogenated rubber component is present in the composition from 50 to 100 phr, and the filler is present from 10 to 150 phr. Further, a secondary rubber component may be present. The compositions have an air permeability of form 1x10⁻⁸ to 3x10⁻⁸ cm³-cm/cm²-sec-atm at 65°C, and are useful for air barriers such as an innerliner for a tire.

United States Patent Application US2004/092648 discloses a composition suitable for an air barrier such as an automotive tire innertube, innerliner, and aircraft tire innertube or innerliner, curing bladders, and other pneumatic devices. The composition comprises an elastomer, a processing oil, and a resin.

The Applicant has now found that it is possible to avoid the drawbacks due to the contact between a fluid under pressure and a green tire, by adding to the crosslinkable elastomeric composition of the rubber layer which is directly in contact with said fluid at least one polythiopolycarboxylic acid or a derivative thereof. The presence of said polythiopolycarboxylic acid or a derivative thereof is capable of increasing the crosslinking rate of said crosslinkable elastomeric composition, in particular in the initial stage of crosslinking. Moreover, the presence of said polythiopolycarboxylic acid or a derivative thereof does not cause a premature crosslinking ("scorching") of said crosslinkable elastomeric composition.

The Applicant has found that, after the curing step, the obtained tire does not show any defects such as, for example, bubbles or fissures, caused by permeation of said fluid into the structure of the tire before crosslinking.

According to a first aspect, the present invention relates to a process for manufacturing tires comprising the following steps:
- forming at least one layer including a crosslinkable elastomeric material on an outer surface of a toroidal support the shape of which substantially matches that of the inner surface of the tire;
- manufacturing a green tire on said toroidal support bearing said at least one layer, said green tire comprising at least one structural element including a crosslinkable elastomeric material;
- closing the green tire in a moulding cavity defined inside a vulcanization mould, said moulding cavity having walls the shape of which matches that of an outer surface of the tire to be produced;
- introducing into the space defined by an inner surface of the tire a fluid under pressure to press the outer surface of the green tire against the walls of the moulding cavity;
- applying heat to the tire for causing the vulcanization of the crosslinkable elastomeric material;
wherein the crosslinkable elastomeric material of said at least one layer includes a crosslinkable elastomeric composition comprising at least one sulfur-curable elastomeric polymer and at least one compound having the following general formula (I):

A-(S)ₚ-B (I)

wherein:
- p is an integer of from 2 to 10;
- A and B, which may be equal or different from each other, represent a group having the following general formula (II): 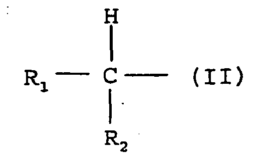 wherein:
   - R₁ represents a group having the following general formula (III):

      -(CH-R₃)ₘ-COR₄ (III)

      wherein:
      - m is an integer of from 0 to 5, extremes included;
      - R₃ represents a hydrogen atom; a linear or branched C₁-C₁₀ alkyl group; a C₆-C₁₈ aryl group; a halogen atom such as, for example, chlorine, fluorine, bromine, iodine;
      - R₄ represents a hydroxyl group; a linear or branched C₁-C₁₈ alkoxy group; a linear or branched mono-(C₁-C₁₈)-alkylamino group; a linear or branched di-(C₁-C₁₈)-alkylamino
      group;
   - R₂ represents a hydrogen atom; a group having general formula (IV) : 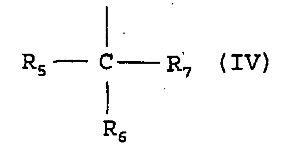 wherein:
      - R₅ represents a group having general formula (III) above disclosed;
      - R₆ and R₇, which may be equal or different from each other, represent a hydrogen atom; a linear or branched C₁-C₁₈ alkyl group; a C₆-C₁₈ aryl groups; a COR₈ group wherein R₈ represents a hydroxyl group, a linear or branched (C₁-C₁₈) alkoxy group, a (C₆-C₁₈) aryloxy group; a SO₂ group; a CN group; a NO₂ group; a NH₂ group.

According to one preferred embodiment, said at least one layer reaches a degree of crosslinking which is sufficient to prevent diffusion and penetration of the fluid under pressure into the green tire, within a period not greater than 10 minutes, preferably of from 1 minute to 5 minutes, working at a temperature not greater than 220°C, preferably of from 120°C to 200°C.

According to one preferred embodiment, said fluid under pressure is selected from steam, air and nitrogen, or mixtures thereof. More preferably, said fluid under pressure is steam.

According to a further aspect, the present invention relates to a tire comprising:
- a carcass structure of a substantially toroidal shape, having opposite lateral edges associated with respective right-hand and left-hand bead structures, said bead structures comprising at least one bead core and at least one bead filler;
- a belt structure applied in a radially external position with respect to said carcass structure;
- a tread band radially superimposed on said belt structure;
- a pair of sidewalls applied laterally on opposite sides with respect to said carcass structure;
- at least one layer including a crosslinked elastomeric material applied in a radially inner position with respect to said carcass structure;
wherein said crosslinked elastomeric material is obtained by crosslinking a crosslinkable elastomeric composition comprising at least one sulfur-curable elastomeric polymer and at least one compound having general formula (I) above disclosed.

According to a further preferred embodiment, said at least one sulfur-curable elastomeric polymer may be selected from butyl rubbers.

According to one preferred embodiment, said at least one sulfur-curable elastomeric polymer may be selected from diene elastomeric polymers.

According to one preferred embodiment, said at least one layer is substantially impermeable to a fluid for inflating the tire when the tire is installed on a rim. In other words, said at least one layer is capable of acting as the so-called liner which, in tubeless tires, is the air-impermeable layer which ensures the hermetic seal of the tire when this tire is installed on a rim and inflated.

According to a further aspect, the present invention relates to a crosslinkable elastomeric composition comprising:
- an amount higher than or equal to 10 phr, preferably of from 50 phr to 100 phr of at least one butyl rubber;
- an amount not higher than or equal to 90 phr, preferably of from 0 phr to 50 phr, of at least one diene elastomeric polymer;
- an amount of from 0.3 phr to 3.0 phr, preferably of from 0.5 phr to 1.5 phr, of at least one compound having general formula (I) above disclosed.

According to a further aspect, the present invention relates to a crosslinked manufactured article obtained by crosslinking the crosslinkable elastomeric composition above disclosed.

For the purpose of the present description and the claims which follow, the term "phr" is used to indicate the parts by weight of a given ingredient per each 100 parts by weight of the elastomeric polymer(s).

For the purpose of the present description and of the claims which follow, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

The process for manufacturing tires according to the present invention may be carried out as disclosed, for example, in European Patent Applications EP 943,421 or EP 919,406 in the name of the Applicant, which are incorporated herein by means of reference. With regard to said process, reference, is also made to International Patent Application WO 2004/045838 in the name of the Applicant which is incorporated herein by means of reference. In particular, the tire under consideration may be obtained by producing the various structural elements directly on a toroidal support on which the tire itself is formed step by step, or at least in the immediate vicinity of this tire. It is also possible to produce said tire according to conventional processes involving the steps of first preparing, separately, a series of semifinished articles corresponding to the various structural elements of the tire (carcass plies, belt strips, bead wires, beads, fillers, sidewalls and tread bands) which are then combined together using a suitable manufacturing machine.

The green tire obtained by one of the abovementioned processes is then subjected to a vulcanization step which may be carried out in any known conventional manner.

As above disclosed, the sulfur-curable elastomeric polymer may be selected from butyl rubbers.

According to one preferred embodiment, said butyl rubbers may be selected from isobutyl rubbers.

Preferably, said isobutyl rubbers may be selected from homopolymers of isoolefin monomer containing from 4 to 12 carbon atoms or copolymers obtained by polymerizing a mixture comprising at least one isoolefin monomer containing from 4 to 12 carbon atoms and at least one conjugated diolefin monomer containing from 4 to 12 carbon atoms.

Preferably, said copolymers contain from 70% by weight to 99.5% by weight, preferably from 85% by weight to 95.5% by weight, based on the hydrocarbon content of the copolymer, of at least one isoolefin monomer and from 30% by weight to 0.5% by weight, preferably of from 15% by weight to 4.5% by weight, based on the hydrocarbon content of the copolymer, of at least one conjugated diolefin monomer.

Preferably, the isoolefin monomer may be selected from C₄-C₁₂ compounds such as, for example, isobutylene, isobutene, 2-methyl-1-butene, 3-methyl-1-butene, 2-methyl-2-butene, methyl vinyl ether, indene, vinyltrimethylsilane, hexene, 4-methyl-1-pentene, or mixtures thereof. Isobutylene is preferred.

Preferably, the conjugated diolefin monomer may be selected from C₄-C₁₄ compounds such as, for example, isoprene, 1,3-butadiene, 2,3-dimethyl-1,3-butadiene, myrcene, 6,6-dimethyl-fulvene, hexadiene, cyclopentadiene, piperylene, or mixtures thereof. Isoprene is preferred.

Other polymerizable monomers such as, for example, styrene, styrene optionally substituted with C₁-C₄-alkyl groups or halogen atoms, such as, for example, methylstyrene, dichlorostyrene, may also be present in the abovementioned isobutyl rubbers.

According to one preferred embodiment, the isobutyl rubbers may be selected from copolymers containing from 95% by weight to 99.5% by weight based on the hydrocarbon content of the copolymer of isobutylene and from 0.5% by weight to 5% by weight based on the hydrocarbon content of the copolymer of isoprene.

Further details regarding isobutyl rubbers and the methods for their preparation may be found, for example, in United States Patents US 2,356,128, US 3,968.076, US 4,474,924, US 4068,051, or US 5,532,312.

Examples of commercially available isobutyl rubbers which may be used in the present invention are the products Exxon^{®} butyl grade of poly(isobutylene-co-isoprene), or vistanex^{®} polyisobutylene rubber, from Exxon.

According to a further preferred embodiment, said butyl rubbers may be selected from halogenated butyl rubbers.

Halogenated butyl rubbers are derived from the butyl rubbers above disclosed by reaction with chlorine or bromine according to methods known in the art. For example, the butyl rubber may be halogenated in hexane diluent, working at a temperature of from 40°C to 60°C, using bromine or chlorine as the halogenation agent. Preferably, the halogen contents is from 0.1% by weight to 10% by weight, preferably from 0.5% by weight to 5% by weight, based on the weight of the halogenated butyl rubber.

Halogenated butyl rubbers that are particularly preferred according to the present invention are chlorobutyl rubber, or bromobutyl rubber.

Further details regarding the halogenated butyl rubbers and the methods for their preparation may be found, for example, in United States Patents US 2,631,984, US 3,099,644, US 4,554,326, US 4681,921, or US 5,681,901.

Examples of commercially available chlorobutyl and bromobutyl rubbers which may be used in the present invention are the products Chlorobutyl CB 1240, or Bromobutyl 2030, from Lanxess.

According to a further preferred embodiment, said butyl rubbers may be selected from branched or "star-branched" butyl rubbers (SBB), or halogenated "star-branched" butyl rubber (HSSB).

Preferably, the star branched butyl rubber is a composition of a butyl rubber, either halogenated or not, and a polydiene or block copolymer, either halogenated or not. The polydiene/block copolymer or branching agents (hereinafter referred to as "polydienes"), are typically cationically reactive and are present during the polymerization of the butyl rubber, or may be blended with the butyl rubber to form the star branched butyl rubber.

More particularly, the star branched butyl rubber is typically a composition of the butyl or halogenated butyl rubber as disclosed above and a copolymer of a polydiene and a partially halogenated polydiene selected from the group comprising styrene, polybutadiene, polyisoprene, polypiperylene, natural rubber, styrene-butadiene rubber, ethylene-propylene diene rubber (EPDM), ethylene-propylene rubber (EPM), styrene-butadiene-styrene or styrene-isoprene-styrene block copolymers, or mixtures thereof. These polydienes are present, based on the monomer wt%, in an amount of from 0.3 wt% to 3 wt%, preferably of from 0.4 wt% to 2.7 wt%.

Further details regarding star branched or halogenated star branched butyl rubbers and methods for their preparation may be found, for example, in European Patent EP 678,529, or in United States Patents US 4,074,035, US 5,071,913, US 5,182,333, US 5,286,804, or US 6,228,978.

Examples of commercially available star branched butyl rubbers which may be used in the present invention are the products Chlorobutyl 1066, or Bromobutyl 2222, from Exxon Mobil.

According to a further preferred embodiment, said butyl rubbers may be selected from halogenated isobutylene/p-alkylstyrene copolymers.

Said halogenated isobutylene/p-alkylstyrene copolymers may be selected from copolymers of an isoolefin containing from 4 to 7 carbon atoms such as, for example, isobutylene, and of a p-alkylstyrene such as, for example, p-methylstyrene. Said copolymers are known in the prior art and are disclosed, for example, in United States Patent US 5,162,445.

Preferred products are those derived from the halogenation of a copolymer between an isoolefin containing from 4 to 7 carbon atoms such as, for example, isobutylene, and a comonomer such as p-alkylstyrene in which at least one of the substituents on the alkyl groups present in the styrene unit is a halogen, preferably chlorine or bromine.

Further details regarding the preparation of halogenated isobutylene/p-alkylstyrene copolymers that are suitable for carrying out the present invention are disclosed, for example, in United States Patent US 5,512,638.

Examples of halogenated isobutylene/p-alkylstyrene copolymers which may be used in the present invention and which are currently commercially available include the Exxpro^{®} products from Exxon Mobil.

Mixtures of the above disclosed butyl rubbers may also be advantageously used for the aim of the present invention.

According to one preferred embodiment, at least one of said butyl rubbers is present in the crosslinkable elastomeric composition in an amount higher than or equal to 10 phr, preferably of from 50 phr to 100 phr.

As above disclosed, the sulfur-curable elastomeric polymer may be selected from diene elastomeric polymers.

According to one preferred embodiment, the diene elastomeric polymers may be selected from those commonly used in sulfur-crosslinkable elastomeric materials, that are particularly suitable for producing tires, that is to say from elastomeric polymers or copolymers with an unsaturated chain having a glass transition temperature (Tg) generally below 20°C, preferably in the range of from 0°C to -110°C. These polymers or copolymers may be of natural origin or may be obtained by solution polymerization, emulsion polymerization or gas-phase polymerization of one or more conjugated diolefins, optionally blended with at least one comonomer selected from monovinylarenes and/or polar comonomers in an amount of not more than 60% by weight.

The conjugated diolefins generally contain from 4 to 12, preferably from 4 to 8 carbon atoms, and may be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-butadiene or isoprene are particularly preferred.

Monovinylarenes which may optionally be used as comonomers generally contain from 8 to 20, preferably from 8 to 12 carbon atoms, and may be selected, for example, from: styrene; 1-vinylnaphthalene; 2-vinylnaphthalene; various alkyl, cycloalkyl, aryl, alkylaryl or arylalkyl derivatives of styrene such as, for example, α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Styrene is particularly preferred.

Polar comonomers which may optionally be used may be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile, or mixtures thereof.

Preferably, the diene elastomeric polymers may be selected, for example, from: cis-1,4-polyisoprene (natural or synthetic, preferably natural rubber), 3,4-polyisoprene, polybutadiene (in particular polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

According to one preferred embodiment, at least one of said diene elastomeric polymers is present in the crosslinkable elastomeric composition in an amount not higher than or equal to 90 phr, preferably of from 0 phr to 50 phr.

The above disclosed crosslinkable elastomeric composition may optionally comprise at least one elastomeric copolymer of ethylene and at least one α-olefin, optionally with a diene. The α-olefins generally contains from 3 to 12 carbon atoms, such as, for example, propylene, 1-butene, 1-pentene, 1-hexene, 1-octene, or mixtures thereof. The diene optionally present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the following are particularly preferred: ethylene/propylene copolymer (EPR), ethylene/propylene/diene copolymers (EPDM); or mixtures thereof.

The above disclosed sulfur-curable elastomeric polymers may optionally be functionalized by reaction with suitable terminating agents or coupling agents. In particular, the diene elastomeric polymers obtained by anionic polymerization in the presence of an organometallic initiator (in particular an organolithium initiator) may be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes (see, for example, European Patent EP 451,604, or United States Patents US 4,742,124 or US 4,550,142).

The above disclosed sulfur-curable elastomeric polymers may optionally include at least one functional group selected from carboxylic groups, carboxylate groups, anhydride groups, ester groups, epoxy groups, or mixtures thereof.

According to one preferred embodiment, in the compound having general formula (I), A and B, which may be equal or different from each other, represent a group having general formula (II) wherein R₁ has the same meanings above disclosed and R₂ represents a group having general formula (IV) above disclosed.

According to a further preferred embodiment, in the compound having general formula (I), A and B, which may be equal or different from each other, represent a group having general formula (II) wherein R₁ and R₂ have the same meanings above disclosed, on condition that at least one of the groups R₁, R₅, R₆ or R₇, represent a COOH group.

According to a further preferred embodiment, said compound having general formula (I) may be selected, for example, from:
- 3,4-dithia-hexane-1,2,5,6-tetracarboxylic acid (known also as dithiodisuccinic acid) having the following formula (V): 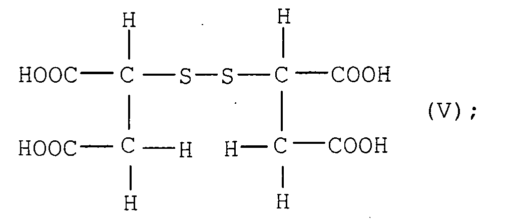
- 3,4-dithia-hexane-1,2,5,6-tetracarboxylic acid-1-ester (known also as dithiodisuccinic acid-1-ester) having the following formula (VI): 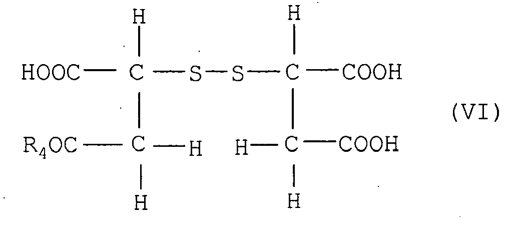 wherein R₄ represents a linear or branched C₁-C₁₈ alkoxy group;
- 3,4-dithia-hexane-1,2,5,6-tetracarboxylic acid-2-ester (known also as dithiodisuccinic acid-2-ester) having the following formula (VII): 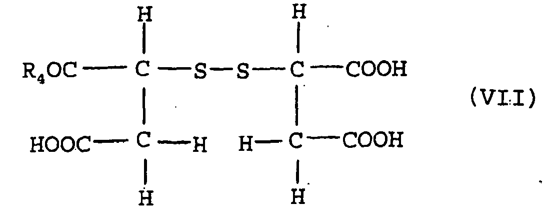
wherein R₄ represents a linear or branched C₁-C₁₈ alkoxy group;
- 3,3'-disulfanediyl-di-aspartic acid having the following formula (VIII): 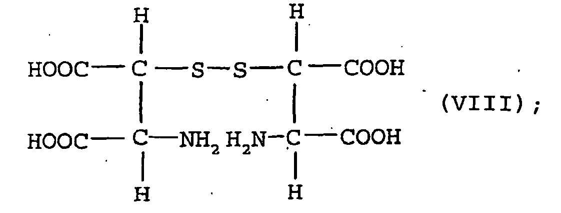
- 2,2'-disulfanediyl-di-adipic acid having the following formula (IX):

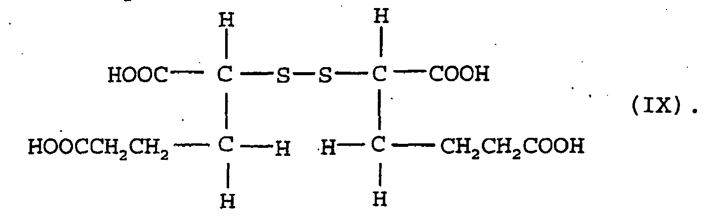

More preferably, said compound having general formula (I) is 3,4-dithia-hexane-1,2,5,6-tetracarboxylic acid having formula (V) above disclosed.

According to one preferred embodiment, said compound having general formula (I) is present in the crosslinkable elastomeric composition in an amount of from 0.3 phr to 3.0 phr, preferably of from 0.5 phr to 1.5 phr.

The compound having general formula (I) above disclosed may be prepared according to processes known in the art. For example, the compound having general formula (I) may be prepared by means of a process comprising the oxidation reaction of at least one mercaptoalkylcarboxylic acid having the following general formula (X): 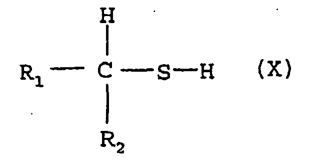 wherein R₁ and R₂ have the same meanings above disclosed, in the presence of an aqueous solution of hydrogen peroxide. Preferably, the reaction is carried out at a temperature of from -10°C to +70°C, more preferably of from +0°C to +30°C, for a time of from 30 min to 24 hours, more preferably of from 4 hours to 8 hours.

Further details regarding the preparation of the compounds having general formula (I) above disclosed may be found, for example, in "Journal of Organic Chemistry" (1971), Vol. 36, No. 10, pg. 1394-1398, or in "Justus Liebigs Annalen der Chemie" (1906), Vol. 348, pg. 132.

Alternatively, the compounds having general formula (I) above disclosed may be prepared by means of the processes disclosed in Canadian Patent Application CA 2,317,296, or in United States Patent US 5,130,363.

At least one reinforcing filler may advantageously be added to the crosslinkable elastomeric composition according to the present invention, in an amount generally of from 0.1 phr to 120 phr, preferably of from 20 phr to 90 phr. The reinforcing filler may be selected from those commonly used for crosslinked manufactured products, in particular for tires, such as, for example, carbon black, silica, alumina, aluminosilicates, calcium carbonate, kaolin, or mixtures thereof.

The types of carbon black which may be used in the present invention may be selected from those conventionally used in the production of tires, generally having a surface area of not less than 20 m²/g (determined by CTAB absorption as described in ISO standard 6810).

The silica which may be used in the present invention may generally be a pyrogenic silica or, preferably, a precipitated silica, with a BET surface area (measured according to ISO standard 5794/1) of from 50 m²/g to 500 m²/g, preferably from 70 m²/g to 200 m²/9.

When a reinforcing filler comprising silica is present, the crosslinkable elastomeric composition may advantageously incorporate a coupling agent capable of interacting with the silica and of linking it to the elastomeric base during the vulcanization.

Coupling agents that are preferably used are those based on silane which may be identified, for example, by the following general formula (XI): 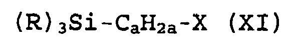 wherein the groups R, which may be equal or different from each other, are selected from: alkyl, alkoxy or aryloxy groups, or from halogen atoms, on condition that at least one of the groups R is an alkoxy or aryloxy group; a is an integer of from 1 to 6, extremes included; X is a group selected from: nitroso, mercapto, amino, epoxide, vinyl, imide, chloro, -(S)ₘCₙH₂ₙ-Si-(R)₃ wherein m and n are integers of from 1 to 6 extremes included and the groups R are as above disclosed.

Among the coupling agents that are particularly preferred are bis(3-triethoxysilylpropyl) tetrasulphide and bis(3-triethoxysilylpropyl) disulphide. Said coupling agents may be used as such or as a suitable mixture with an inert filler (for example carbon black) so as to facilitate their incorporation into the crosslinkable elastomeric composition.

The crosslinkable elastomeric composition according to the present invention may be vulcanized according to known techniques, in particular with sulphur-based vulcanizing systems commonly used for diene elastomeric polymers. To this end, in the composition, after one or more stages of thermomechanical processing, a sulphur-based vulcanizing agent is incorporated together with vulcanization accelerators. In the final processing stage, the temperature is generally kept below 120°C and preferably below 100°C, so as to avoid any unwanted pre-crosslinking phenomena.

The vulcanizing agent most advantageously used is sulphur, or molecules containing sulphur (sulphur donors), with accelerators and activators known to those skilled in the art.

Activators that are particularly effective are zinc compounds, and in particular ZnO, ZnCO₃, zinc salts of saturated or unsaturated fatty acids containing from 8 to 18 carbon atoms, such as, for example, zinc stearate, which are preferably formed in situ in the elastomeric composition from ZnO and fatty acid, and also BiO, PbO, Pb₃O₄, PbO₂, or mixtures thereof.

Accelerators that are commonly used may be selected from: dithiocarbamates, guanidine, thiourea, thiazoles, sulphenamides, thiurams, amines, xanthates, or mixtures thereof.

The crosslinkable elastomeric composition according to the present invention may comprise other commonly used additives selected on the basis of the specific application for which the composition is intended. For example, the following may be added to said composition: antioxidants, anti-ageing agents, plasticizers, adhesives, anti-ozone agents, modifying resins, fibres (for example Kevlar^{®} pulp), or mixtures thereof.

In particular, for the purpose of further improving the processability, a plasticizer generally selected from mineral oils, vegetable oils, synthetic oils, or mixtures thereof, such as, for example, aromatic oil, naphthenic oil, phthalates, soybean oil, or mixtures thereof, may be added to the elastomeric composition according to the present invention. The amount of plasticizer generally ranges from 0 phr to 70 phr, preferably from 5 phr to 30 phr.

The abovementioned crosslinkable elastomeric composition may be prepared by mixing together the sulfur-curable elastomeric polymer with the reinforcing filler optionally present and with the other additives according to techniques known in the art. The mixing may be carried out, for example, using an open-mill mixer or an internal mixer of the type with tangential rotors (Banbury) or interlocking rotors (Intermix), or in continuous mixers of the Ko-Kneader type (Buss) or co-rotating or counter-rotating twin-screw type.

The present invention will now be further illustrated by means of a number of production examples, with reference to the attached figures, which are given purely as a guide and therefore without limitation, in which:
- Fig. 1 shows, in cross section, a tire enclosed inside a vulcanization mould;
- Fig. 2 is a.partial cutaway perspective view of a tire produced according to the invention.

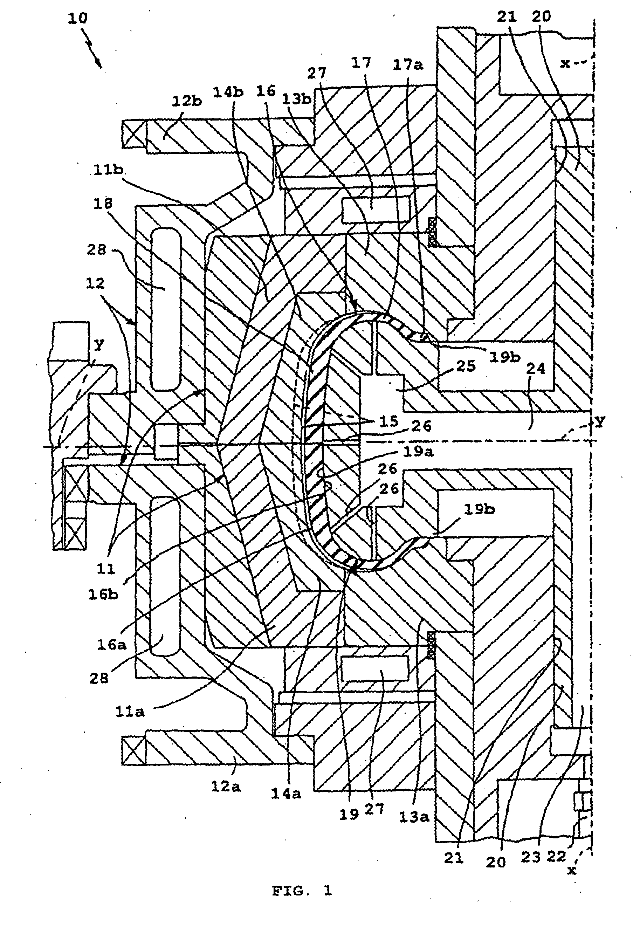

With reference to Fig. 1, (10) is a general reference for a moulding and vulcanization device for tires.

The device (10) comprises a vulcanization mould (11) combined with a vulcanization press (12), said vulcanization press only being illustrated diagrammatically since it may be produced in any manner which is convenient to a person skilled in the art. For example, the mould (11) may be composed of a lower mould half (11a) and an upper mould half (11b) in engagement with a bed (12a) and a closing portion (12b) of press (12), respectively.

In the example illustrated for indicative purposes, each of the lower (11a) and upper (11b) mould halves of the mould (11) has a lower (13a) and upper (13b) cheek respectively, and a crown of lower (14a) and upper (14b) sectors.

The lower (11a) and upper (11b) mould halves are movable relative to each other between an open condition in which they are mutually spaced apart (not shown in Fig. 1), and a closed position, as shown in Fig. 1, in which they are disposed mutually closed to each other to form a moulding cavity (15) whose inner sides, defined by cheeks (12a) and (12b) and sectors (14a) and (14b), reproduce the geometric configuration of the outer surface (16a) of a tire (16) to be obtained.

In more detail, cheeks (13a) and (13b) are intended to form the outer surfaces of the opposite sidewalls (17) of the tire (16), while sectors (14a) and (14b) are intended to form the so-called tread band (18) of the tire itself, creating a series of cuts and longitudinal and/or transverse notches and grooves therein, appropriately arranged in a "tread band pattern".

The device (10) also includes the use of at least one toroidal support (19) made of metal or another solid material, having an outer surface which substantially reproduces the shape of an inner surface of the tire (16). The toroidal support (19) conveniently consists of a collapsible drum, that is to say that it is composed of centripetally mobile circumferential segments to disassemble the toroidal support and allow it to be removed easily from the tire (16) once processing is complete.

In accordance with the present invention, the green tire (16) is assembled on the toroidal support (19) before this support is inserted, together with the tire itself, into the vulcanization mould (11) set in the open position. In particular, a first layer including a crosslinkable elastomeric material according to the present invention corresponding to the inner surface (16b) of the tire (16) is formed on the toroidal support (19) on which the subsequent structural elements are then formed. This forming step is advantageously carried out by winding at least one ribbon-like band, including a crosslinkable elastomeric material according to the present invention, in close coils along the profile in cross section of the toroidal support. Said ribbon-like band may be obtained, for example, by extruding the abovementioned crosslinkable elastomeric material. In this way, the toroidal support (19) is advantageously used as a rigid mould for the forming and/or deposition of the various structural elements such as, for example, the carcass plies, bead reinforcing structures, belt strips, sidewalls and tread band, involved in the formation of the tire itself. Further details on the modalities of forming and/or deposition of the structural elements of the tire (16) on the toroidal support (19) are disclosed, for example, in the abovementioned European Patent Applications EP 943,421 or EP 919,406 in the name of the Applicant.

In this case, the geometric configuration of the inner surface of the green tire (16) will correspond exactly to the configuration of the outer surface of the toroidal support (19).

However, as will emerge more clearly hereinbelow, it is preferably provided that the extension of the outer surface (19a) of the toroidal support (19) should be adequately smaller than the extension of the inner surface (16b) of the tire (16) once vulcanization is complete.

The toroidal support (19) preferably has at least one centering shank (20) to be engaged in a centering seat (21) provided in the mould (11), for establishing a precise positioning of the toroidal support (19) itself and of the tire (16) carried thereon within the moulding cavity (15). In the production solution illustrated, the toroidal support (19) has two centering shanks (20) extending from opposite sides according to a geometric axis (x) common to the toroidal support (19), the tire (16) and the moulding cavity (15) and arranged for being fitted into corresponding centering seats (21) formed in the bed (12a) and the closing portion (12b) of the vulcanization press (12), respectively.

More particularly, the coupling between each centering shank (20) of the toroidal support (19) and the corresponding centering seat (21) formed in the mould (11) defines, between each cheek (13a) and (13b) of the mould itself and the corresponding inner circumferential edge (19b) of the toroidal support (19), a housing seat for a radially internal edge (17a) of the tire (16), usually known as the tire "bead". Said bead seats ensure precise geometric moulding of the beads (17a) since the geometry is determined by the direct coupling between the rigid surfaces of the toroidal support (19) and of the cheeks (13a) and (13b) of the mould (11).

In addition, the abovementioned bead seats ensure stable and precise centering of the tire (16) relative to the axis (y) of the moulding cavity (15).

Preferably, the toroidal support (19) is also designed so as to have, at least at the regions corresponding to the beads (17a) of the tire (16), an elastically yielding structure in an axial direction, following the mutual approaching of the cheeks (13a) and (13b) during the closing step of the mould (11).

The axial deformation which the toroidal support (19) undergoes in the zones of contact with the cheeks (13a) and (13b) in the vicinity of the beads (17a) of the tire is preferably comprised from 0.3 mm to 0.5 mm, so as to generate on the surfaces in contact with the corresponding cheeks (13a) and (13b) a specific pressure comprised from 18 bar to 25 bar. Said contact pressure, during the step of moulding and curing the tire (16), prevents any escape of elastomeric material between the surfaces in mutual contact of the toroidal support (19) and of the cheeks (13a) and (13b), thus avoiding the consequent formation of flash.

Once the positioning of the toroidal support (19) with the tire (16) on the lower portion (11a) of the mould (11) has been carried out, the mould itself is placed in the closed position.

As may be seen in Fig. 1, when the mould (11) is closed, the walls of the moulding cavity (15) remain at a certain distance from the outer surface of the tire (16), particularly in the tread band (18) of the latter. In this step, the tread band (18) may, however, be partially penetrated by reliefs located on the sectors (14a) and (14b) to define the abovementioned "tread band pattern".

Still on closure of the mould (11), each of the inner circumferential edges (17a) of the tire (16) is sealingly engaged between the inner circumferential portions of the toroidal support (19) and inner circumferential portions of the lower (13a) and upper (13b) cheeks. The tire (16) will remain sealingly engaged in the mould (11) in the manner described above until the moment at which, at the end of the moulding and curing cycle, the mould (11) itself will be brought again to its open position.

Once the mould closure has been completed (11), the tire (16) is submitted to a pressing step with its outer surface (16a) against the walls of the moulding cavity (15), concomitant with the application of heat, so as to cause molecular crosslinking of the tire itself and consequent geometrical and structural stabilization of the latter.

To this end, the device (10) is provided with pressing means comprising at least one primary duct (22) for feeding of a fluid under pressure, formed in bed (12a) of the press (11) for example, and opening into one of the centering seats (21) for sending a fluid under pressure to at least one connecting duct (23) made, preferably coaxially, along at least one of the centering shanks (20).

The connecting duct (23) terminates, for example through suitable branches (24) made radially in the toroidal support (19), at an annular chamber (25) present inside the toroidal support (19) itself. From the annular chamber (25) extends, through the toroidal support (19), a plurality of channels for feeding of fluid under pressure (26) which open into the outer surface (19a) of the toroidal support (19) itself and suitably distributed over the circumferential extension of said support.

The fluid under pressure fed from the primary duct (22) reaches the feeding channels (26) via the connecting duct (23), the radial branches (24) and the annular chamber (25), then opening onto the outer surface (19a) of the toroidal support (19). The fluid under pressure is thus introduced into a diffusion interspace created between the outer surface (19) of the toroidal support and the inner surface (16b) of the tire (16) in which the feeding channels come together. Said inner surface (16b), as already mentioned above, comprises a layer including a crosslinkable elastomeric material according to the present invention which is capable of crosslinking within the first moments of introduction of said fluid under pressure, and of thereby avoiding the diffusion of the fluid into the green tire (16).

According to one embodiment of the present invention, the abovementioned diffusion interspace may be created directly as a result of an expansion of the tire (16) brought about under the effect of the force exerted by the fluid under pressure. In other words, the pressing of the tire (16) against the walls of the moulding cavity (15) takes place concomitantly with an expansion imposed on the tire (16) itself, until its outer surface (16a) is brought to completely adhere to the inner walls of the moulding cavity (15).

Alternatively, according to another embodiment, the abovementioned diffusion interspace may be at least partially defined by a surface lowering provided on the outer surface (19a) of the toroidal support (19). In this case also, an expansion of the tire (16) may be obtained concomitantly with the pressing step following from introduction of the fluid under pressure, which increases the volume of the diffusion interspace.

According to one preferred embodiment, the fluid under pressure introduced into the diffusion interspace consists of steam, said steam optionally being mixed with nitrogen or another inert gas.

Advantageously, a heating fluid may be introduced into said diffusion interspace so as to supply heat to the toroidal support (19) from the inside outwards. Said heating fluid may consist of or at least comprise the same fluid under pressure. In this case, the steam may be, preferably, overheated to a temperature preferably comprised between 170°C and 210°C and fed in at a pressure gradually increasing up to a value comprised between 16 bar and 30 bar, preferably about 18 bar. Consequently, the abovementioned primary duct (22) and connecting duct (23), and also the radial branches (24), the annular chamber (25) and the feeding channels (26) together with further ducts (27) and (28) adjacent to the cheeks (13a) and (13b) and to the sectors (14a) and (14b) of the mould (17) supplied with pressurized steam at high temperature, also act as means for heating the walls of the mould (11) in order to supply to tire (16), from the outside inwards, the heat required for the molecular crosslinking of the tire itself.

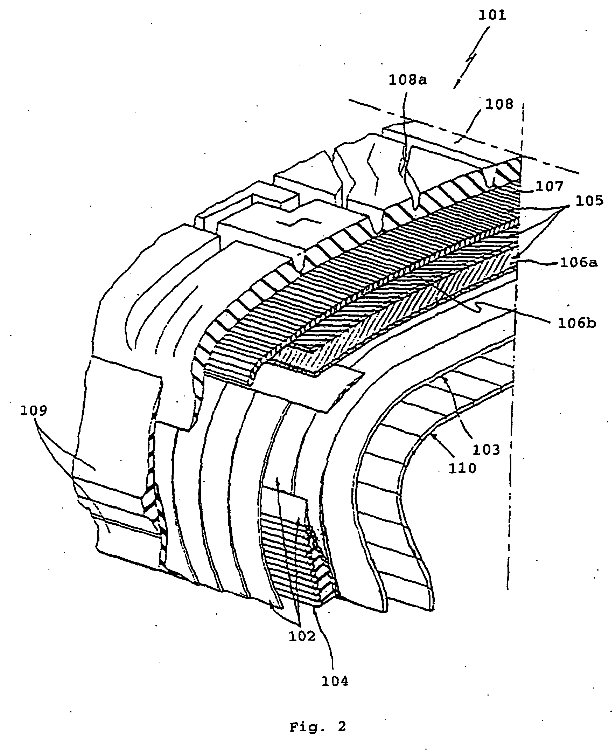

With reference to Fig. 2, the tire (101) essentially comprises a carcass structure (102) having at least a first rubberized carcass ply (103) shaped in a substantially toroidal configuration and engaged, by means of its opposite circumferential edges, to a pair of annular structures (104) commonly known as "bead wires" which, once the tire is finished, are located in the zone usually referred to as the bead. The opposite lateral edges of the abovementioned carcass ply (103) are coupled with respective bead wires (104). Alternatively, coupling between the carcass ply (103) and the bead wires (104) may be achieved by folding back the opposite lateral edges of the carcass ply (103) around the bead wires (104), so as to form the abovementioned carcass back-folds (not shown in Fig. 2.

The rubberized carcass ply (103) generally consists of a plurality of reinforcing cords arranged parallel to each other and at least partially coated with a crosslinked elastomeric material. These reinforcing cords are usually made of textile fibres such as, for example, rayon, nylon, or polyethylene terephthalate, or of steel wires which are stranded, together, coated with a metal alloy (for example copper/zinc, zinc/manganese or zinc/molybdenum/cobalt alloys, and the like).

The rubberized carcass ply (103) is usually of radial type, i.e. it incorporates reinforcing cords arranged in a substantially perpendicular direction relative to a circumferential direction.

A belt structure (105) comprising one or more belt strips (106a), (106b) and (107) is applied to the carcass structure (102), in a circumferentially external position. In the specific embodiment of Fig. 2, the belt structure (105) comprises two belt strips (106a) and (106b), which incorporate a plurality of reinforcing cords, typically metal cords, which are parallel to each other in each strip and intersecting with respect to the adjacent strip, oriented so as to form a predetermined angle with respect to a circumferential direction. The belt structure (105) may optionally comprise at least one reinforcing layer (107) at 0°, commonly known as a "0° belt", placed on the radially outermost belt strip (106b), which generally incorporates a plurality of reinforcing cords, typically textile cords, arranged at an angle of a few degrees with respect to a circumferential direction, coated and welded together by means of a crosslinked elastomeric material.

A tread band (108) is superimposed circumferentially on the belt structure (105) and on it, after a moulding operation carried out concomitantly with the curing of the tire, are made longitudinal and/or transverse grooves (108) arranged so as to define a desired "tread band pattern".

The tire (101) also comprises a pair of sidewalls (109) applied laterally to the opposite sides of the carcass structure (102). A strip including a crosslinked elastomeric material (not shown in Fig. 2) commonly known as a "mini-sidewall" may optionally be present in the connecting zone between the sidewalls (109) and the tread band (108), which is generally obtained by co-extrusion with the tread band and makes it possible to improve the mechanical interaction between the tread band (108) and the sidewalls (109).

The tire (101) also comprises a layer including a crosslinkable elastomeric material according to the present invention (110), generally known as liner, which provide the necessary impermeability to a fluid for inflating the tire when this tire is installed on a rim and inflated.

In the case of tubeless tires, a further layer (not shown in Fig. 2) may also be provided in a radially inner position with respect to the rubberized carcass ply (103), over the layer including a crosslinkable elastomeric material according to the present invention (110), said further layer improving the abovementioned impermeability.

The present invention will be further illustrated hereinbelow with the aid of a number of production examples, given purely for indicative purposes and without any limitation thereof.

### EXAMPLE 1

### Preparation of 3,4-dithia-hexane-1,2,5,6-tetracarboxylic acid

105 g of mercaptosuccinic acid were added into a 500 ml round-bottomed flask containing 110 ml of deionized water: the mixture was maintained, under stirring, at 21°C, with an external water bath, for 30 min.

Subsequently, maintaining the mixture under the same conditions above disclosed, 30 ml of an aqueous solution of hydrogen peroxide (H₂O₂ - 35% by weight in distilled water) were added dropwise, in 25 min: the obtained mixture was then stirred, at room temperature, for 3 hours and 30 min, until the complete dissolution of mercaptosuccinic acid was obtained.

The obtained solution was maintained under stirring, at 21°C, for 5 hours and 15 min.

The solution was subsequently dried, under vacuum, for 5 hours and the resulting solid was recrystallized from toluene/acetic acid (5:1) obtaining a desired product (85 g; yield 82%.

### EXAMPLES 2-3

### Preparation of the elastomeric compositions

The compounds given in Table 1 (phr) were prepared as follows.

All the components given in Table 1, except for ZnO, TBBS, sulphur and DS, were mixed together in an internal mixer (Pomini PL 1.6 model). After about 5 minutes and, in any case, as soon as the temperature reached 125 ± 5°C, the abovementioned compound was removed from the reactor (lst step).

Said compound was introduced into an open laboratory mixer and the missing components, i.e. TBBS, sulphur and DS, were added (2nd step).

**TABLE 1**

| EXAMPLE | 2 (*) | 3 |
|---|---|---|
| 1^{st} STEP | | |
| NR | 30 | 30 |
| CIIR | 70 | 70 |
| Carbon black | 60 | 60 |
| Aromatic oil | 10 | 10 |
| Stearic acid | 2 | 2 |
| Antioxidant | 0.5 | 0.5 |
| 2^{nd} STEP | | |
| ZnO | 3 | 3 |
| TBBS | 0.7 | 0.7 |
| Sulfur | 1.3 | 1.3 |
| DS | - | 1.0 |

| | | |
|---|---|---|
| (*): comparative. NR: natural rubber; CIIR: chlorinated isobutylene/isoprene copolymer with a halogen content of 1.2% by weight (Chlorobutyl CB 1240 from Lanxess); Carbon black: N660 (Cabot); Antioxidant: phenyl-p-phenylenediamine; TBBS: N-t-butyl-2-benzothiazilesulphenamide (Vulkacit NZ from Bayer) ; DS: 3,4-dithia-hexane-1,2,5,6-tetracarboxylic acid of Example 1. | | |

The crosslinkable elastomeric compositions disclosed above were subjected to "scorch time" measurement, at 127°C, according to Standard ISO 289-2:1994.

Said crosslinkable elastomeric compositions were also subjected to MDR rheometric analysis using a Monsanto MDR rheometer, the tests being carried out at 170°C for 20 minutes at an oscillation frequency of 1.66 Hz (100 oscillations per minute) and an oscillation amplitude of ± 0.5°.

The static mechanical properties according to Standard ISO 37:1994 as well as hardness in IRHD degrees (at 23°C and at 100°C) according to ISO standard 48:1994, were measured on samples of the abovementioned elastomeric compositions vulcanized at 170°C for 10 min. The results obtained are given in Table 2.

Table 2 also shows the dynamic mechanical properties, measured using an Instron dynamic device in the traction-compression mode according to the following methods. A test piece of the crosslinked elastomeric composition (vulcanized at 170°C for 10 min) having a cylindrical form (length = 25 mm; diameter = 14 mm), compression-preloaded up to a 25% longitudinal deformation with respect to the initial length, and kept at the prefixed temperature (23°C or 70°C) for the whole duration of the test, was submitted to a dynamic sinusoidal strain having an amplitude of ±3.5% with respect to the length under pre-load, with a 100 Hz frequency. The dynamic mechanical properties are expressed in terms of dynamic elastic modulus (E') and Tan delta (loss factor) values. The Tan delta value is calculated as a ratio between viscous modulus (E") and elastic modulus (E').

**TABLE 2**

| EXAMPLE | 2 (*) | 3 |
|---|---|---|
| Scorch time (min) | 27.50 | 26.50 |

| MDR RHEOMETRIC ANALYSIS (20 min, 170°C) | | |
|---|---|---|
| ML (dN.m) | 1.33 | 1.39 |
| MH (dN.m) | 7.99 | 8.14 |
| T05 | 0.99 | 0.93 |
| TS1 | 1.67 | 1.22 |
| TS2 | 2.19 | 1.54 |
| T30 | 2.19 | 1.55 |
| T60 | 3.11 | 2.59 |
| T90 | 5.54 | 5.30 |

| STATIC MECHANICAL PROPERTIES | | |
|---|---|---|
| 50% Modulus (MPa) | 0.94 | 0.97 |
| 100% Modulus (MPa) | 1.65 | 1.70 |
| 300% Modulus (MPa) | 4.89 | 5.14 |
| Stress at break (MPa) | 6.80 | 6.92 |
| Elongation at break (%) | 478 | 455 |

| DYNAMIC MECHANICAL PROPERTIES | | |
|---|---|---|
| E^{↑} (23°C) | 6.486 | 6.774 |
| E^{↑} (70°C) | 4.033 | 4.217 |
| Tan delta (23°C) | 0.456 | 0.457 |
| Tan delta (70°C) | 0.188 | 0.195 |
| IRHD Hardness (23°C) | 54.1 | 55.0 |
| IRHD Hardness (70°C) | 40.7 | 41.8 |

| | | |
|---|---|---|
| (*) : comparative | | |

The above disclosed data clearly show that the presence of the compound having general formula (I) in the crosslinkable elastomeric composition according to the present invention (Example 2) allows to increase the rate of crosslinking, in particular in the initial stage: as matter of fact, the TS1, TS2 and T30 values, are lower with respect to those obtained in the absence of said compound having general formula (I) (Example 1). Said improvement was obtained without negatively affecting the scorch time. Moreover, also the mechanical properties (both static and dynamic) are not negatively affected.

### EXAMPLE 4

The elastomeric composition of Example 3 was used to prepare the "liner" of some P6000 205/60R15 tires. The tires were manufactured using a device as shown in Fig. 1, using steam as fluid under pressure. After curing, the tires were examined visually and no drawbacks were found such as, for example, the presence of bubbles or fissures either on the liner or on the carcass, or the presence of any bubbles visible from the outside in the region of the sidewalls and the "mini-sidewalls", caused by permeation of the steam into the structure of the tire.

## Claims

1. Process for manufacturing tires comprising the following steps:
- forming at least one layer including a crosslinkable elastomeric material on an outer surface of a toroidal support the shape of which substantially matches that of the inner surface of the tire;
- manufacturing a green tire on said toroidal support bearing said at least one layer, said green tire comprising at least one structural element including a crosslinkable elastomeric material;
- closing the green tire in a moulding cavity defined inside a vulcanization mould, said moulding cavity having walls the shape of which matches that of an outer surface of the tire to be produced;
- introducing into the space defined by an inner surface of the tire a fluid under pressure to press the outer surface of the green tire against the walls of the moulding cavity;
- applying heat to the tire for causing the vulcanization of the crosslinkable elastomeric material;
**characterized in that** the crosslinkable elastomeric material of said at least one layer includes a crosslinkable elastomeric composition comprising at least one sulfur-curable elastomeric polymer and at least one compound having the following general formula (I):
A-(S)ₚ-B (I)
wherein:
- p is an integer of from 2 to 10;
- A and B, which may be equal or different from each other, represent a group having the following general formula (II): 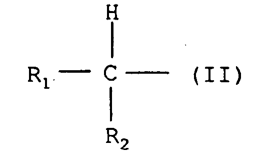 wherein:
- R₁ represents a group having the following general formula (III):
-(CH-R₃)ₘ-COR₄ (III)
wherein:
- m is an integer of from 0 to 5, extremes included;
- R₃ represents a hydrogen atom; a linear or branched C₁-C₁₈ alkyl group; a C₆-C₁₈ aryl group; a halogen atom such as chlorine, fluorine, bromine, iodine;
- R₄ represents a hydroxyl group; a linear or branched C₁-C₁₈ alkoxy group; a linear or branched mono-(C₁-C₁₈)-alkylamino group; a linear or branched di-(C₁-C₁₈)-alkylamino group;
- R₂ represents a hydrogen atom; a group having general formula (IV): 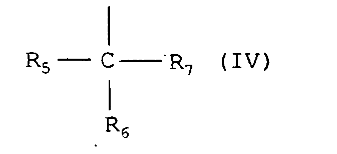 wherein:
- R₅ represents a group having general formula (III) above disclosed;
- R₆ and R₇, which may be equal or different from each other, represent a hydrogen atom; a linear or branched C₁-C₁₈ alkyl group; a C₆-C₁₈ aryl groups; a COR₈ group wherein R₈ represents a hydroxyl group, a linear or branched (C₁-C₁₈) alkoxy group, a (C₆-C₁₈) aryloxy group; a SO₂ group; a CN group; a NO₂ group; a NH₂ group.

2. Process according to Claim 1, wherein said at least one layer reaches a degree of crosslinking which is sufficient to prevent the diffusion and penetration of the fluid under pressure into the green tire, within a period not greater than 10 minutes, working at a temperature not greater than 220°C.

3. Process according to Claim 2, wherein said at least one layer reaches a degree of crosslinking which is sufficient to prevent the diffusion and penetration of the fluid under pressure into the green tire within a period of between 1 minute and 5 minutes.

4. Process according to Claim 2 or 3, wherein said at least one layer reaches a degree of crosslinking which is sufficient to prevent the diffusion and penetration of the fluid under pressure into the green tire, working at a temperature of between 120°C and 200°C.

5. Process according to any one of the preceding claims, wherein said fluid under pressure is selected from steam, air and nitrogen, or mixtures thereof.

6. Process according to Claim 5, wherein said fluid under pressure is steam.

7. Process according to any one of the preceding claims, wherein said at least one sulfur-curable elastomeric polymer is selected from butyl rubbers.

8. Process according to claim 7, wherein said butyl rubbers are selected from isobutyl rubbers.

9. Process according to claim 7, wherein said butyl rubbers are selected from halogenated butyl rubbers.

10. Process according to claim 7, wherein said butyl rubbers are selected from branched or "star-branched" butyl rubbers (SBB), or halogenated "star-branched" butyl rubber (HSSB).

11. Process according to claim 7, wherein said butyl rubbers are selected from halogenated isobutylene/p-alkylstyrene copolymers.

12. Process according to any one of claims 7 to 11,
wherein at least one of said butyl rubbers is present in the crosslinkable elastomeric composition in an amount higher than or equal to 10 phr.

13. Process according to claim 12, wherein at least one of said butyl rubbers is present in the crosslinkable elastomeric composition in an amount of from 50 phr to 100 phr.

14. Process according to any one of claims 1 to 6,
wherein said sulfur-curable elastomeric polymer is selected from diene elastomeric polymers.

15. Process according to claim 14, wherein said diene elastomeric polymers have a glass transition temperature (T_{g}) below 20°C.

16. Process according to claim 15, wherein said diene elastomeric polymers are selected from: cis-1,4-polyisoprene (natural or synthetic), 3,4-polyisoprene, polybutadiene (in particular polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

17. Process according to any one of claims 14 to 16,
wherein at least one of said diene elastomeric polymers is present in the crosslinkable elastomeric composition in an amount not higher than or equal to 90 phr.

18. Process according to claim 17, wherein at least one of said diene elastomeric polymers is present in the crosslinkable elastomeric composition in an amount of from 0 phr to 50 phr.

19. Process according to any one of the preceding claims, wherein said crosslinkable elastomeric composition comprises at least one elastomeric copolymer of ethylene and at least one α-olefin, optionally with a diene.

20. Process according to claim 19, wherein said at least one elastomeric copolymer of ethylene and at least one α-olefin, optionally with a diene is selected from: ethylene/propylene copolymer (EPR), ethylene/propylene/diene copolymers (EPDM); or mixtures thereof.

21. Process according to any one of the preceding claims, wherein in said compound having general formula (I), A and B, which may be equal or different from each other, represent a group having general formula (II) wherein R₁ as defined in claim 1 and R₂ according to the general formula (IV) of claim 1 is used.

22. Process according to any one of claims 1 to 20,
wherein in said compound having general formula (I), A and B, which may be equal or different from each other, represent a group having general formula (II) wherein R₁ and R₂ of claim 1 is used, on condition that at least one of the groups R₁, R₅, R₆ or R₇, represent a COOH group.

23. Process according to any one of the preceding claims, wherein said compound having general formula (I) is selected from:
- 3,4-dithia-hexane-1,2,5,6-tetracarboxylic acid (known also as dithiodisuccinic acid) having the following formula (V): 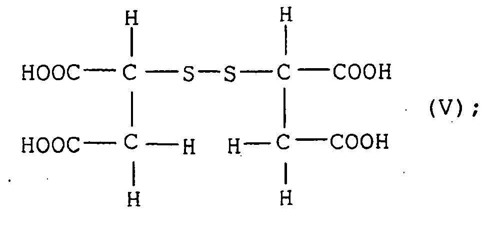
- 3,4-dithia-hexane-1,2,5,6-tetracarboxylic acid-1-ester (known also as dithiodisuccinic acid-1-ester) having the following formula (VI): 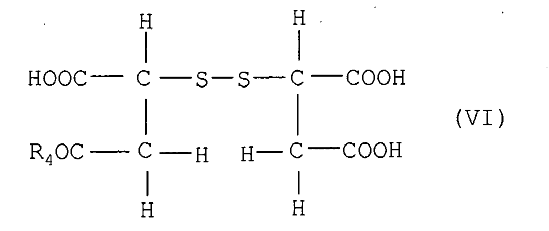 wherein R₄ represents a linear or branched C₁-C₁₈ alkoxy group;
- 3,4-dithia-hexane-1,2,5,6-tetracarboxylic acid-2-ester (known also as dithiodisuccinic acid-2-ester) having the following formula (VII): 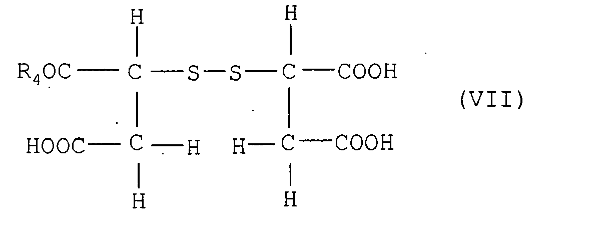
wherein R₄ represents a linear or branched C₁-C₁₈ alkoxy group;
- 3,3'-disulfanediyl-di-aspartic acid having the following formula (VIII): 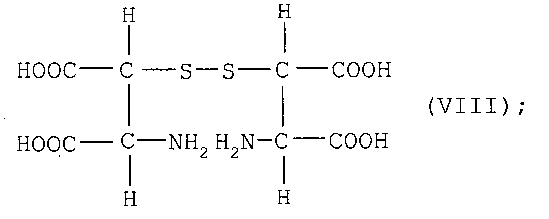
- 2,2'-disulfanediyl-di-adipic acid having the following formula (IX):

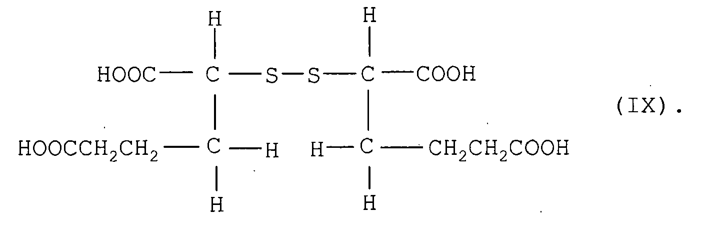

24. Process according to claim 23, wherein said compound having general formula (I) is 3,4-dithiahexane-1,2,5,6-tetracarboxylic acid having formula (V) according to claim 23.

25. Process according to any one of the preceding claims, wherein said compound having general formula (I) is present in the crosslinkable elastomeric composition in an amount of from 0.3 phr to 3.0 phr.

26. Process according to claim 25, wherein said compound having general formula (I) is present in the crosslinkable elastomeric composition in an amount of from 0.5 phr to 1.5 phr.

27. Process according to any one of the preceding claims, wherein said crosslinkable elastomeric composition comprises from 0 phr to 120 phr of at least one additional reinforcing filler.

28. Process according to claim 27, wherein said crosslinkable elastomeric composition comprises from 20 phr to 90 phr of at least one additional reiforcing filler.

29. Process according to claims 27 or 28, wherein said additional reinforcing filler is silica.

30. Process according to claim 29, wherein said crosslinkable elastomeric composition comprises at least one silane coupling agent.

31. Process according to claim 30, wherein said silane coupling agent is selected from compounds having the following general formula (XI):
(R)₃Si-CₐH₂ₐ-X (XI)
wherein the groups R, which may be equal or different from each other, are selected from: alkyl, alkoxy or aryloxy groups, or from halogen atoms, on condition that at least one of the groups R is an alkoxy or aryloxy group; a is an integer of from 1 to 6, extremes included; X is a group selected from: nitroso, mercapto, amino, epoxide, vinyl, imide, chloro, -(S)ₘCₙH₂ₙ-Si-(R)₃ wherein m and n are integers of from 1 to 6 extremes included.

32. Tire comprising:
- a carcass structure of a substantially toroidal shape, having opposite lateral edges associated with respective right-hand and left-hand bead structures, said bead structures comprising at least one bead core and at least one bead filler;
- a belt structure applied in a radially external position with respect to said carcass structure;
- a tread band radially superimposed on said belt structure;
- a pair of sidewalls applied laterally on opposite sides with respect to said carcass structure;
- at least one layer including a crosslinked elastomeric material applied in a radially inner position with respect to said carcass structure;
**characterized in that** said crosslinked elastomeric material is obtained by crosslinking a crosslinkable elastomeric composition comprising at least one sulfur-curable elastomeric polymer and at least one compound having general formula (I) according to any one of claims 1 or 21-26.

33. Tire according to claim 32, wherein said sulfur-curable elastomeric polymer is defined according to any one of claims 7 to 18.

34. Tire according to claim 32 or 33, wherein said crosslinkable elastomeric composition comprises at least one elastomeric copolymer of ethylene and at least one α-olefin, optionally with a diene as defined according to claim 20.

35. Tire according to any one of claims 32 to 34,
wherein said compound having general formula (I) is defined according to any one of claims 21 to 26.

36. Tire according to any one of the claims 32 to 35,
wherein said crosslinkable elastomeric composition comprises from 0 phr to 120 phr of at least one additional reinforcing filler.

37. Tire according to claim 36, wherein said crosslinkable elastomeric composition comprises from 20 phr to 90 phr of at least one additional reiforcing filler.

38. Tire according to claims 36 or 37, wherein said additional reinforcing filler is silica.

39. Tire according to claim 38, wherein said crosslinkable elastomeric composition comprises at least one silane coupling agent as defined according to claim 31.

40. Crosslinkable elastomeric composition comprising:
- an amount higher than or equal to 10 phr of at least one butyl rubber;
- an amount not higher than or equal to 90 phr of at least one diene elastomeric polymer;
**characterized in that** it further comprises:
- an amount of from 0.3 phr to 3.0 phr of at least one compound having general formula (I) according to any one of claims 1 or 21-26.

41. Crosslinkable elastomeric composition according to claim 40, wherein said butyl rubber is present in an amount of from 50 phr to 100 phr.

42. Crosslinkable elastomeric composition according to claim 40 or 41, wherein said diene elastomeric polymer is present in an amount of from 0 phr to 50 phr.

43. Crosslinkable elastomeric composition according to any one of claims 40 to 42, wherein said compound having general formula (I) is present in an amount of from 0.5 phr to 1.5 phr.

44. Crosslinkable elastomeric composition according to any one of claims 40 to 43, wherein said sulfur-curable elastomeric polymer is defined according to any one of claims 7 to 18.

45. Crosslinkable elastomeric composition according to any one of claims 40 to 44, wherein said crosslinkable elastomeric composition comprises at least one elastomeric copolymer of ethylene and at least one α-olefin, optionally with a diene as defined according to claim 20.

46. Crosslinkable elastomeric composition according to any one of claims 40 to 45, wherein said compound having general formula (I) is defined according to any one of claims 21 to 26.

47. Crosslinkable elastomeric composition according to any one of claims 40 to 46, wherein said crosslinkable elastomeric composition comprises from 0 phr to 120 phr of at least one additional reinforcing filler.

48. Crosslinkable elastomeric composition according to claim 47, wherein said crosslinkable elastomeric composition comprises from 20 phr to 90 phr of at least one additional reiforcing filler.

49. Crosslinkable elastomeric composition according to claims 47 or 48, wherein said additional reinforcing filler is silica.

50. Crosslinkable elastomeric composition according to claim 49, wherein said crosslinkable elastomeric composition comprises at least one silane coupling agent as defined according to claim 31.

51. Crosslinked manufactured article **characterized in that** it is obtained by crosslinking a crosslinkable elastomeric composition according to any one of claims 40 to 50.

## Patentansprüche

1. Verfahren zur Herstellung von Reifen, das die folgenden Schritte umfaßt:
- Ausbilden mindestens einer Schicht, die ein vernetzbares Elastomermaterial einschließt, auf einer außeren Oberfläche eines torusförmigen Trägers, dessen Form im wesentlichen derjenigen der inneren Oberfläche des Reifens entspricht;
- Fertigen eines Grünreifens auf dem torusförmigen Träger, der die mindestens eine Schicht trägt, wobei der Grünreifen mindestens ein Strukturelement umfaßt, das ein vernetzbares Elastomermaterial einschließt;
- Einschließen des Grünreifens in einen Formhohlraum, der im Inneren einer Vulkanisationsform festgelegt ist, wobei der Formhohlraum Wände hat, deren Form derjenigen einer außeren Oberfläche des herzustellenden Reifens entspricht;
- Einbringen eines Fluids unter Druck in den Raum, der durch eine innere Oberfläche des Reifens festgelegt wird, um die äußere Oberfläche des Grünreifens gegen die Wände des Formhohlraums zu drücken;
- Anwenden von Wärme auf den Reifen, um die Vulkanisation des vernetzbaren Elastomermaterials hervorzurufen;
**dadurch gekennzeichnet, daß** das vernetzbare Elastomermaterial der mindestens einen Schicht eine vernetzbare Elastomerzusammensetzung einschließt, die mindestens ein schwefelhärtbares elastomeres Polymer und mindestens eine Verbindung mit der folgenden allgemeinen Formel (I) einschließt:
A-(S)ₚ-B (I)
worin:
- p eine ganze Zahl von 2 bis 10 ist; - A und B, die gleich oder verschieden voneinander sein können, eine Gruppe mt der folgenden allgemeinen Formel (II) bezeichnen: 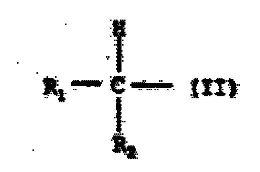 worin:
- R₁ eine Gruppe mit der folgenden allgemeinen Formel (III) bezeichnet:
-(CH-R₃)ₘ-COR₄ (III)
- m eine ganze Zahl von 0 bis 5, die Grenzen eingeschlossen, ist;
- R₃ ein Wasserstoffatom; eine lineare oder verzweigte C₁₋₁₈-Alkyl-Gruppe; eine C₆₋₁₉-Aryl-Gruppe; ein Halogenatom, wie Chlor, Fluor, Brom, Iod bezeichnet; ₋ R₄ eine Hydroxyl-Gruppe; eine lineare oder verzweigte C₁₋₁₈-Alkoxy-Gruppe; eine lineare oder verzweigte Mono-(C₁₋₁₈)-Alkylamino-Gruppe; eine lineare oder verzweigte Di-(C₁₋₁₈)-Alkylamino-Gruppe bezeichnet;
- R₂ ein Wasserstoffatom; eine Gruppe mit der allgemeinen Formel (IV) bezeichnet: 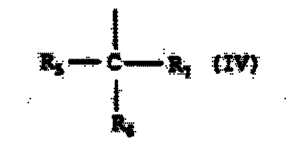 worin:
- R₅ eine Gruppe mit der oben offenbarten allgemeinen Formel (III) bezeichnet;
- R₆ und R₇, die gleich oder verschieden voneinander seinkönnen, ein Wasserstoffatom; eine lineare oder verzweigte C₁₋₁₈-Alkyl-Gruppe; eine C₆₋₁₈-Aryl-Gruppe; eine COR₈-Gruppe, worin R₈ eine Hydroxyl-Gruppe, eine lineare oder verzweigte (C₁₋₁₈)-Alkoxy-Gruppe, eine (C₆₋₁₈)-Aryloxy-Gruppe bezeichnet; eine SO₂-Gruppe; eine CN-Gruppe; eine NO₂-Gruppe; eine NH₂-Gruppe bezeichnet.

2. Verfahren gemäß Anspruch 1, bei dem die mindestens eine Schicht einen Grad der Vernetzung erreicht, der ausreichend ist, um die Diffusion und das Eindringen des Fluids unter Druck in den Grünreifen innerhalb eines Zeitraums von nicht größer als 10 Minuten, wobei bei einer Temperatur nicht über 220°C gearbeitet wird, zu verhindern.

3. Verfahren gemäß Anspruch 2, bei dem die mindestens eine Schicht einen Grad der Vernetzung erreicht, der ausreichend ist, um die Diffusion und das Eindringen des Fluids unter Druck in den Grünreifens innerhalb eines Zeitraums von zwischen 1 Minute und 5 Minuten zu verhindern.

4. Verfahren gemäß Anspruch 2 oder 3, bei dem die mindestens eine Schicht einen Grad der Vernetzung erreicht, der ausreichend ist, um die Diffusion und das Eindringen des Fluids unter Druck in den Grünreifen, wobei bei einer Temperatur von zwischen 120 und 200°C gearbeitet wird, zu verhindern.

5. Verfahren gemäß mindestens einem der vorhergehenden Ansprüche, bei dem das Fluid unter Druck ausgewählt ist aus Dampf, Luft und Stickstoff oder Mischungen davon.

6. Verfahren gemäß Anspruch 5, bei dem das Fluid unter Druck Dampf ist.

7. Verfahren gemäß mindestens einem der vorhergehenden Ansprüche, bei dem mindestens ein schwefelhärtbares elastomeres Polymer aus Butylkautschuken ausgewählt ist.

8. Verfahren gemäß Anspruch 7, bei dem die Butylkautschuke aus Isobutylkautschuken ausgewählt sind.

9. Verfahren gemäß Anspruch 7, bei dem die Butylkautschuke aus halogenierten Butylkautschuken ausgewählt sind.

10. Verfahren gemäß Anspruch 7, bei dem die Butylkautschuke aus verzweigten oder "Stern-verzweigten" Butylkautschuken (SBB) oder halogeniertem "Stern-verzweigtem" Butylkautschuk (HSSB) ausgewählt sind.

11. Verfaren gemäß Anspruch 7, bei dem die Butylkautschuke aus halogenierten Isobutylen/p-Alkylstyrol-Copolymeren ausgewählt sind.

12. Verfahren gemäß mindestens einem der Ansprüche 7 bis 11, bei dem mindestens einer der Butylkautschuke in der vernetzbaren Elastomerzusammensetzung in einer Menge höher als oder gleich 10 phr vorliegt.

13. Verfahren gemäß Anspruch 12, bei dem mindestens einer der Butylkautschuke in der vernetzbaren Elastomerzusammensetzung in einer Menge von 50 bis 100 phr vorliegt.

14. Verfahren gemäß mindestens einem der Ansprüche 1 bis 6, bei dem das schwefelhärtbare elastomere Polymer aus elastomeren Dien-Polymeren ausgewählt ist.

15. Verfahren gemäß Anspruch 14, bei dem die elastomeren Dien-Polymere eine Glasübergangstemperatur (T_{g}) unter 20°C haben.

16. Verfahren gemäß Anspruch 15, bei dem die elastomeren Dien-Polymere ausgewählt sind aus; cis-1,4-Polyisopren (natürlich oder synthetisch), 3,4-Polyisopren, Polybutadien (insbesondere Polybutadien mit einem hohen 1,4-cis-Gehalt), optional halogenierten Isopren/Isobuten-Copolymeren, 1,3-Butadien/Acrylnitri-Copolymeren, Styrol/1,3-Butadien-Copolymeren, Styrol/Isopren/1,3-Butadien-Copolymeren, Styrol/1,3-Butadien/Acrylnitril-Copolymeren oder Mischungen davon.

17. Verfahren gemäß mindestens einem der Ansprüche 14 bis 16, bei dem mindestens eines der elastomeren Dien-Polymere in einer Menge nicht höher als oder gleich 90 phr in der vernetzbaren Elastomerzusammensetzung vorliegt.

18. Verfahren gemäß Anspruch 17, bei dem mindestens eines der elastomeren Dien-Polymere in der vernetzbaren Elastomerzusammensetzung in einer Menge von 0 bis 50 phr vorliegt.

19. Verfahren gemäß mindestens einem der vorhergehenden Ansprüche, bei dem die vernetzbare Elastomerzusammensetzung mindestens ein elastomeres Copolymer von Ethylen und mindestens einem α-Olefin, optional mit einem Dien umfaßt.

20. Verfahren gemäß Anspruch 19, bei dem mindestens ein elastomeres Copolymer von Ethylen und mindestens einem α-Olefin, optional mit einem Dien, ausgewählt ist aus: Ethylen/Propylen-Copolymer (EPR), Ethylen/Propylen/Dien-Copolymeren (EPDM); oder Mischungen davon.

21. Verfahren gemäß mindestens einem der vorhergehenden Ansprüche, bei dem in der Verbindung mit der allgemeinen Formel (I) A und B, die gleich oder verschieden voneinander sein können, eine Gruppe mit der allgemeinen Formel (II) bezeichnen, worin R₁ wie in Anspruch 1 definiert und R₂ gemäß der allgemeinen Formel (IV) von Anspruch 1 verwendet wird.

22. Verfahren gemäß mindestens einem der Ansprüche 1 bis 20, bei dem in der Verbindung mit der allgemeinen Formel (I) A und B, die gleich oder verschieden voneinander sein können eine Gruppe der allgemeinen Formel (II) bezeichen, worin R₁ und R₂ von Anspruch 1 verwendet werden, unter der Bedingung, daß mindestens eine der Gruppen R_{1,} R₅, R₆ oder R₇ eine COOH-Gruppe bezeichnet.

23. Verfahren gemäß mindestens einem der vorhergehenden Ansprüche, bei dem die Verbindung mit der allgemeinen Formel (I) ausgewählt ist aus:
- 3,4-Dithia-hexan-1,2,5,6-tetracarbonsäure (auch als Dithiodibernsteinsäure bekannt) mit der allgemeinen Formel (V): 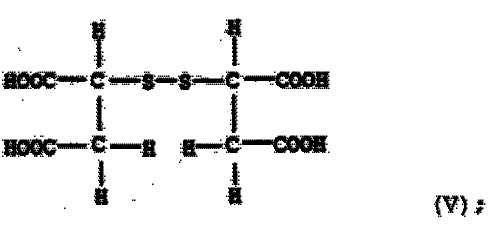
- 3,4-Dithia-hexan-1,2,5,6-tetracarbonsäure-1-ester (auch als Dithiodibernsteinsäure-1-ester bekannt) mit der folgenden Formel (VI): 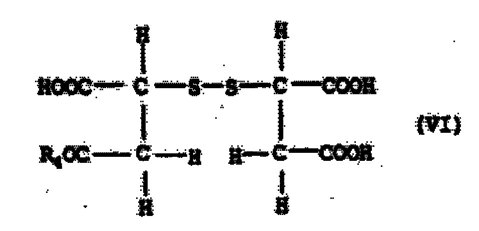 worin R₄ eine lineare oder verzweigte C₁₋₁₈-Alkoxy-Gruppe bezeichnet;
- 3,4-Dithia-hexan-1,2,5,6-tetracarbonsäure-2-ester (auch als Dithiodibernsteinsäure-2-ester bekannt) mit der folgenden Formel (VII): 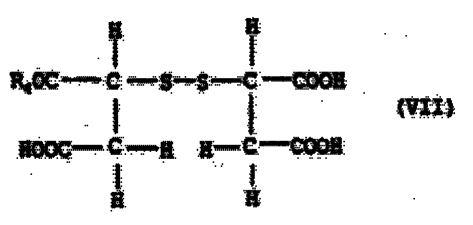 worin R₄ eine lineare oder verzweigt C₁₋₁₈-Alkoxy-Gruppe bezeichnet;
- 3,3'-Disulfandiyl-di-asparaginsäure mit der folgenden Formel (VIII): 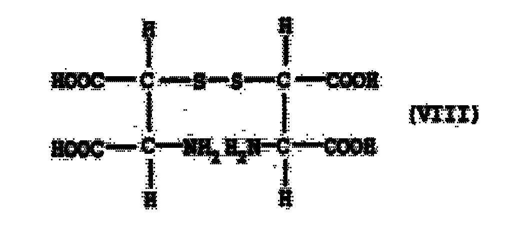
- 2,2'-Disulfandiyl-di-adipinsäure mit der folgenden Formel (IX):

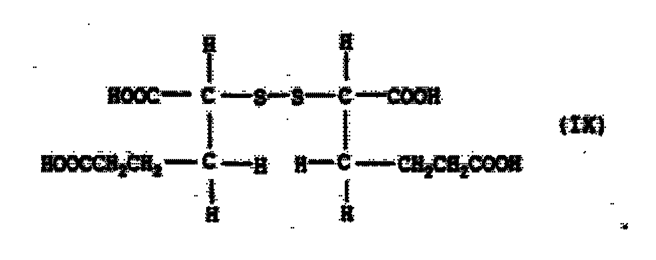

24. Verfahren gemäß Anspruch 23, bei dem die Verbindung mit der allgemeinen Formel (I) 3,4-Dithiahexan-1,2,5,6-tetracarbonsäure mit der Formel (V) gemäß Anspruch 23 ist.

25. Verfahren gemäß mindestens einem der vorhergehenden Ansprüche, bei dem die Verbindung mit der allgemeinen Formel (I) in der vernetzbaren Elastomerzusammensetzung in einer Menge von 0,3 bis 3,0 phr vorliegt.

26. Verfahren gemäß Anspruch 25, bei dem die Verbindung mit der allgemeinen Formel (I) in der vernetzbaren Elastomerzusammensetzung in einer Menge von 0,5 bis 1,5 phr vorliegt.

27. Verfahren gemäß mindestens einem der vorhergehenden Ansprüche, bei dem die vernetzbare Elastomerzusammensetzung 0 bis 120 phr mindestens eines zusätzlichen Verstärkungsfüllstoffs enthält.

28. Verfahren gemäß Anspruch 27, bei dem die vernetzbare Elastomerzusammensetzung 20 bis 90 phr mindestens eines zusätzlichen Verstärkungsfüllstoffs enthält.

29. Verfahren gemäß Anspruch 27 oder 28, bei dem der zusätzliche Verstärkungsfüllstoff Silica ist.

30. Verfahren gemäß Anspruch 29, bei dem die vernetzbare Elastomerzusammensetzung mindestens einen Silan- Haftvermittler enthält.

31. Verfahren gemäß Anspruch 30, bei dem der Silan-Haftvermittler ausgewählt ist aus Verbindungen mit der folgenden allgemeinen Formel (XI):
(R)₃Si-Cₐ-H₂ₐ-X (XI)
worin die Gruppen R, die gleich oder verschieden voneinander sein können, ausgewählt sind aus: Alkyl-, Alkoxy- oder Aryloxy-Gruppen oder aus Halogenatomen unter der Bedingung, daß mindestens eine der Gruppen R eine Alkoxy- oder Aryloxy-Gruppe ist; a eine ganze Zahl von 1 bis 6 ist, die Grenzen eingeschlossen; X eine Gruppe ist, ausgewählt aus: Nitroso, Mercapto, Amino, Epoxid, Vinyl, Imid, Chloro, -(S)ₘCₙH₂ₙ-Si-(R)₃, worin m und n ganze Zahlen von 1 bis 6, die Grenzen eingeschlossen, sind.

32. Reifen, der umfaßt:
- einer Karkassenstruktur mit einer im wesentlichen torusförmigen Form, mit gegenüberliegenden Seitenrändern, die mit jeweiligen rechten und linken Wulststrukturen in Verbindung stehen, wobei die Wulststrukturen mindestens einen Wulstkern und mindestens einen Wulstfüllstoff umfassen;
- eine Gürtelstruktur, die in einer radial äußeren Position in bezug auf die Karkassenstruktur angebracht ist;
- ein Laufflächenband, das radial über die Gürtelstruktur gelegt ist;
- ein Paar Seitenwände, das lateral an gegenüberliegenden Seiten in bezug auf die Karkassenstruktur angebracht ist; - mindestens eine, ein vernetztes Elastomermaterial einschließende Schicht, die in einer radial inneren Position in bezug auf die Karkassenstruktur angebracht ist;
**dadurch gekennzeichnet, daß** das vernetzte Elastomermaterial erhalten wird durch Vernetzen einer vernetzbaren Elastomerzusammensetzung, die mindestens ein schwefelhärtbares elastomeres Polymer und mindestens eine Verbindung mit der allgemeinen Formel (I) gemäß mindestens einem der Ansprüche 1 oder 21 bis 26 umfaßt.

33. Reifen gemäß Anspruch 32, in dem das schwefelhärtbare elastomere Polymer gemäß mindestens einem der Ansprüche 7 bis 18 definiert ist.

34. Reifen gemäß Anspruch 32 oder 33, in dem die vernetzbare Elastomerzusammensetzung mindestens ein α-Olefin, optional mit einem Dien, wie gemäß Anspruch 20 definiert, umfaßt.

35. Reifen gemäß mindestens einem der Ansprüche 32 bis 34, in dem die Verbindung mit der allgemeinen Formel (I) gemäß mindestens einem der Ansprüche 21 bis 26 definiert ist.

36. Reifen gemäß mindestens einem der Ansprüche 32 bis 35, in dem die vernetzbare Elastomerzusammensetzung 0 bis 120 phr mindestens eines zusätzlichen Verstärkungsfüllstoffs enthält.

37. Reifen gemäß Anspruch 36, in dem die vernetzbare Elastomerzusammensetzung 20 bis 90 phr mindestens eines zusätzlichen Verstärkungsfüllstoffs enthält.

38. Reifen gemäß Ansprunch 36 oder 37, in dem der zusätzliche Verstärkungsfüllstoff Silica ist.

39. Reifen gemäß Anspruch 38, in dem die vernetzbare Elastomerzusammensetzung mindestens einen Silan-Haftvermittler, wie gemäß Anspruch 31 definiert, enthält.

40. Vernetzbare Elastomerzusammensetzung, die umfaßt:
- eine Menge höher als oder gleich 10 phr mindestens eines Butylkautschuks;
- eine Menge nicht höher als oder gleich 90 phr mindestens eines elastomeren Dien-Polymers;
**dadurch gekennzeichnet, daß** sie ferner umfaßt:
- eine Menge von 0,3 bis 3,0 phr mindestens einer Verbindung mit der allgemeinen Formel (I) gemäß mindestens einer der Ansprüche 1 oder 21 bis 26.

41. Vernetzbare Elastomerzusammensetzung gemäß Anspruch 40, in der der Butylkautschuk in einer Menge von 50 bis 100 phr vorliegt.

42. Vernetzbare Elastomerzusammensetzung gemäß Anspruch 40 oder 41, in der das elastomere Dien-Polymer in einer Menge von 0 bis 50 phr vorliegt.

43. Vernetzbare Elastomerzusammensetzung gemäß mindestens einem der Ansprüche 40 bis 42, in der die Verbindung mit der allgemeinen Formel (I) in einer Menge von 0,5 bis 1,5 phr vorliegt.

44. Vernetzbare Elastomerzusammensetzung gemäß mindestens einem der Ansprüche 40 bis 43, in der das schwefelhärtbare elastomere Polymer gemäß mindestens einem der Ansprüche 7 bis 18 definiert ist.

45. Vernetzbare Elastomerzusammensetzung gemäß mindestens einem der Ansprüche 40 bis 44, wobei die vernetzbare Elastomerzusammensetzung mindestens ein elastomeres Copolymer von Ethylen und mindestens einem α-Olefin, optional mit einem Dien, wie gemäß Anspruch 20 definiert, umfaßt.

46. Vernetzbare Elastomerzusammensetzung gemäß mindestens einem der Ansprüche 40 bis 45, in der die Verbindung mit der allgemeinen Formel (I) gemäß mindestens einem der Ansprüche 21 bis 26 definiert ist.

47. Vernetzbare Elastomerzusammensetzung gemäß mindestens einem der Ansprüche 40 bis 46, wobei die vernetzbare Elastomerzusammensetzung 0 bis 120 phr mindestens eines zusätzlichen Verstärkungsfüllstoffs enthält.

48. Vernetzbare Elastomerzusammensetzung gemäß Anspruch 47, wobei die vernetzbare Elastomerzusammensetzung 20 bis 90 phr mindestens eines zusätzlichen Verstärkungsfüllstoffs enthält.

49. Vernetzbare Elastomerzusammensetzung gemäß Anspruch 47 oder 48, in der der zusätzliche Verstärkungsfüllstoff Silica ist.

50. Vernetzbare Elastomerzusammensetzung gemäß Anspruch 49, wobei die vernetzbare Elastomerzusammensetzung mindestens einen Silan-Haftvermittler, wie gemäß Anspruch 31 definiert, enthält.

51. Vernetzter gefertigter Artikel, **dadurch gekennzeichnet, daß** er durch die Vernetzung einer vernetzbaren Elastomerzusammensetzung gemäß mindestens einem der Ansprüche 40 bis 50 erhalten wurde.

## Revendications

1. Procédé de fabrication de pneus, comprenant les étapes suivantes :
- former au moins une couche contenant un matériau élastomère réticulable, sur une surface externe d'un support toroïdal dont la forme correspond sensiblement à celle de la surface interne du pneu ;
- fabriquer un pneu cru sur ledit support toroïdal portant ladite couche au nombre d'au moins une, lequel pneu cru comprend au moins un élément de structure contenant un matériau élastomère réticulable ;
- enfermer le pneu cru dans une cavité de moulage définie à l'intérieur d'un moule de vulcanisation, laquelle cavité de moulage est dotée de parois dont la forme correspond à celle de la surface externe du pneu à fabriquer ;
- introduire un fluide sous pression dans l'espace défini par la surface interne du pneu, afin de presser la surface externe du pneu cru contre les parois de la cavité de moulage ;
- et apporter de la chaleur au pneu, pour provoquer la vulcanisation du matériau élastomère réticulable ;
et **caractérisé en ce que** le matériau élastomère réticulable de ladite couche au nombre d'au moins une contient une composition élastomère réticulable comprenant au moins un polymère élastomère vulcanisable au soufre et au moins un composé de formule générale (I) suivante :
A-(S)ₚ-B (I)
dans laquelle
- l'indice p est un nombre entier valant de 2 à 10 ;
- et A et B représentent des groupes qui peuvent être identiques ou différents l'un de l'autre et qui ont la formule générale (II) suivante : 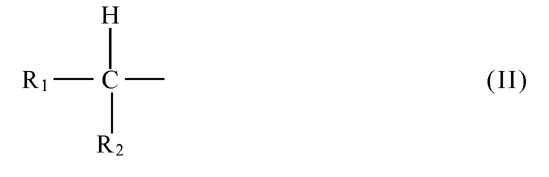
dans laquelle :
- R₁ représente un groupe de formule générale (III) suivante :
-(CHR₃)ₘ-COR₄ (III)
dans laquelle
- l'indice m est un nombre entier qui vaut de 0 à 5, bornes incluses,
- R₃ représente un atome d'hydrogène, un groupe alkyle en C₁₋₁₈ linéaire ou ramifié, un groupe aryle en C₆₋₁₈, ou un atome d'halogène, comme un atome de chlore, de fluor, de brome
ou d'iode,
- et R₄ représente un groupe hydroxyle, un groupe alcoxy en C₁₋₁₈ linéaire ou ramifié, un groupe mono(alkyle en C₁₋₁₈)amino linéaire ou ramifié, ou un groupe di(alkyle en C₁₋₁₈)amino linéaire ou ramifié ;
- et R₂ représente un atome d'hydrogène, ou un groupe de formule générale (IV) suivante : 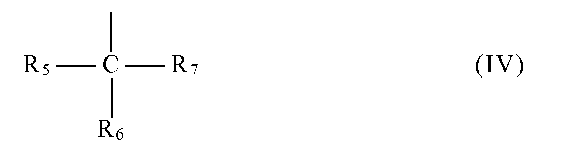 dans laquelle
- R₅ représente un groupe de formule générale (III) indiquée ci-dessus ;
- et R₆ et R₇ représentent des entités qui peuvent être identiques
ou différentes l'une de l'autre, et représentent chacun un atome d'hydrogène, un groupe alkyle en C₁₋₁₈ linéaire ou ramifié, un groupe aryle en C₆₋₁₈, un groupe de formule COR₈ où R₈ représente un groupe hydroxyle, alcoxy en C₁₋₁₈ linéaire ou ramifié ou aryloxy en C₆₋₁₈, ou un groupe de formule SO₂ CN, NO₂ ou NH₂.

2. Procédé conforme à la revendication 1, dans lequel on atteint au sein de ladite couche au nombre d'au moins une, en un laps de temps d'au plus 10 minutes et en opérant à une température d'au plus 220 °C, un degré de réticulation suffisant pour empêcher le fluide sous pression de diffuser et de pénétrer dans le pneu cru.

3. Procédé conforme à la revendication 2, dans lequel on atteint au sein de ladite couche au nombre d'au moins une, en un laps de temps de 1 à 5 minutes, un degré de réticulation suffisant pour empêcher le fluide sous pression de diffuser et de pénétrer dans le pneu cru.

4. Procédé conforme à la revendication 2 ou 3, dans lequel on atteint au sein de ladite couche au nombre d'au moins une, en opérant à une température de 120 à 200 °C, un degré de réticulation suffisant pour empêcher le fluide sous pression de diffuser et de pénétrer dans le pneu cru.

5. Procédé conforme à l'une des revendications précédentes, dans lequel ledit fluide sous pression est choisi parmi de la vapeur d'eau, de l'air et de l'azote, et des mélanges de ceux-ci.

6. Procédé conforme à la revendication 5, dans lequel ledit fluide sous pression est de la vapeur d'eau.

7. Procédé conforme à l'une des revendications précédentes, dans lequel ledit polymère élastomère vulcanisable au soufre, au nombre d'au moins un, est choisi parmi les caoutchoucs butyl.

8. Procédé conforme à la revendication 7, dans lequel lesdits caoutchoucs butyl sont choisis parmi les caoutchoucs isobutyl.

9. Procédé conforme à la revendication 7, dans lequel lesdits caoutchoucs butyl sont choisis parmi les caoutchoucs butyl halogénés.

10. Procédé conforme à la revendication 7, dans lequel lesdits caoutchoucs butyl sont choisis parmi les caoutchoucs butyl ramifiés ou "ramifiés en étoile" (caoutchoucs SBB) et les caoutchoucs butyl "ramifiés en étoile" halogénés (caoutchoucs HSBB).

11. Procédé conforme à la revendication 7, dans lequel lesdits caoutchoucs butyl sont choisis parmi les copolymères halogénés d'iso-butène et de para-alkyl-styrène.

12. Procédé conforme à l'une des revendications 7 à 11, dans lequel au moins l'un desdits caoutchoucs butyl se trouve présent dans la composition élastomère réticulable en une proportion supérieure ou égale à 10 pce (parties pour cent parties d'élastomère).

13. Procédé conforme à la revendication 12, dans lequel au moins l'un desdits caoutchoucs butyl se trouve présent dans la composition élastomère réticulable en une proportion de 50 à 100 pce.

14. Procédé conforme à l'une des revendications 1 à 6, dans lequel ledit polymère élastomère vulcanisable au soufre est choisi parmi les polymères élastomères dérivés de diène(s).

15. Procédé conforme à la revendication 14, dans lequel lesdits polymères élastomères dérivés de diène(s) présentent une température de transition vitreuse Tg inférieure à 20 °C.

16. Procédé conforme à la revendication 15, dans lequel lesdits polymères élastomères dérivés de diène(s) sont choisis parmi les suivants : cis-1,4-polyisoprène naturel ou synthétique, 3,4-polyisoprène, polybutadiène, en particulier un polybutadiène à haute proportion d'enchaînements 1,4-cis, copolymères d'isoprène et d'isobutène, éventuellement halogénés, copolymères de buta-1,3-diène et d'acrylonitrile, copolymères de styrène et de buta-1,3-diène, copolymères de styrène, d'isoprène et de buta-1,3-diène, et copolymères de styrène, de buta-1,3-diène et d'acrylonitrile, ainsi que les mélanges de tels polymères.

17. Procédé conforme à l'une des revendications 14 à 16, dans lequel au moins l'un desdits polymères élastomères dérivés de diène(s) se trouve présent dans la composition élastomère réticulable en une proportion inérieure ou égale à 90 pce (parties pour cent parties d'élastomère).

18. Procédé conforme à la revendication 17, dans lequel au moins l'un desdits polymères élastomères dérivés de diène(s) se trouve présent dans la composition élastomère réticulable en une proportion de 0 à 50 pce.

19. Procédé conforme à l'une des revendications précédentes, dans lequel ladite composition élastomère réticulable comprend au moins un copolymère élastomère dérivé d'éthylène et d'au moins une α-oléfine, et en option, d'un diène.

20. Procédé conforme à la revendication 19, dans lequel ledit copolymère élastomère au nombre d'au moins un, dérivé d'éthylène et d'au moins une α-oléfine, et en option, d'un diène, est choisi parmi les copolymères d'éthylène et de propylène (EPR), les copolymères d'éthylène, de propylène et de diène (EPDM), et les mélanges de tels copolymères.

21. Procédé conforme à l'une des revendications précédentes, dans lequel on utilise un composé de formule générale (I) dans laquelle A et B représentent des groupes qui peuvent être identiques ou différents l'un de l'autre et qui ont la formule générale (II) où R₁ a la signification indiquée dans la revendication 1 et R₂ représente un groupe de formule générale (IV) indiquée dans la revendication 1.

22. Procédé conforme à l'une des revendications 1 à 20, dans lequel on utilise un composé de formule générale (I) dans laquelle A et B représentent des groupes qui peuvent être identiques ou différents l'un de l'autre et qui ont la formule générale (II) où R₁ et R₂ ont les significations indiquées dans la revendication 1, sous réserve qu'au moins l'un des symboles R₁, R₅, R₆ et R₇ représente un groupe de formule COOH.

23. Procédé conforme à l'une des revendications précédentes, dans lequel ledit composé de formule générale (I) est choisi parmi les suivants :
- l'acide 3,4-dithia-hexane-1,2,5,6-tétracarboxylique (connu également sous le nom d'acide dithio-disuccinique), de formule (V) suivante : 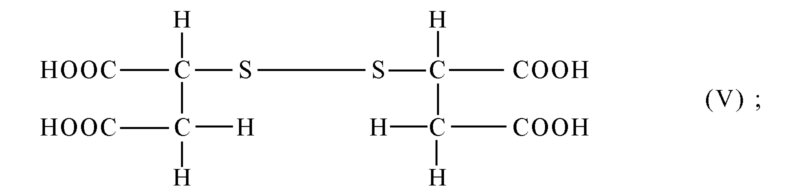
- les 1-esters de l'acide 3,4-dithia-hexane-1,2,5,6-tétracarboxylique (connus également sous le nom de 1-esters d'acide dithio-disuccinique), de formule (VI) suivante : 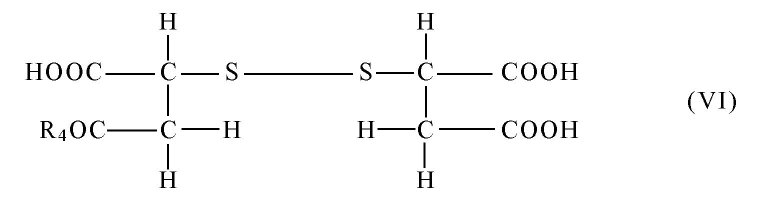
où R₄ représente un groupe alcoxy en C₁₋₁₈ linéaire ou ramifié ;
- les 2-esters de l'acide 3,4-dithia-hexane-1,2,5,6-tétracarboxylique (connus également sous le nom de 2-esters d'acide dithio-disuccinique), de formule (VII) suivante : 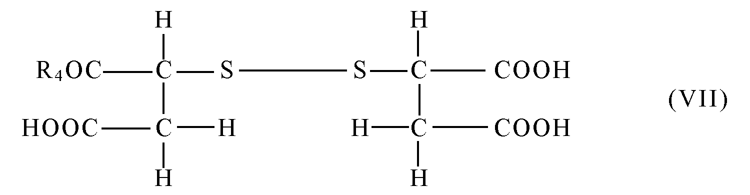
où R₄ représente un groupe alcoxy en C₁₋₁₈ linéaire ou ramifié ;
- l'acide 3,3'-disulfanediyl-diaspartique), de formule (VIII) suivante : 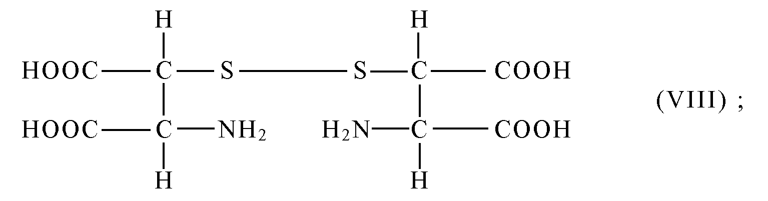
- l'acide 2,2'-disulfanediyl-diadipique, de formule (IX) suivante :

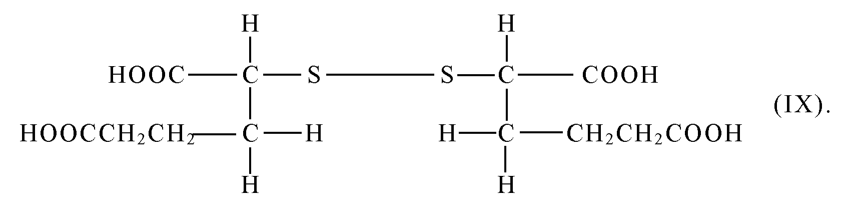

24. Procédé conforme à la revendication 23, dans lequel ledit composé de formule générale (I) est de l'acide 3,4-dithia-hexane-1,2,5,6-tétra-carboxylique de formule (V) indiquée dans la revendication 23.

25. Procédé conforme à l'une des revendications précédentes, dans lequel ledit composé de formule générale (I) se trouve présent dans la composition élastomère réticulable en une proportion de 0,3 à 3,0 pce.

26. Procédé conforme à la revendication 25, dans lequel ledit composé de formule générale (I) se trouve présent dans la composition élastomère réticulable en une proportion de 0,5 à 1,5 pce.

27. Procédé conforme à l'une des revendications précédentes, dans lequel ladite composition élastomère réticulable comprend au moins une charge renforçante additionnelle en une proportion de 0 à 120 pce.

28. Procédé conforme à la revendication 27, dans lequel ladite composition élastomère réticulable comprend au moins une charge renforçante additionnelle en une proportion de 20 à 90 pce.

29. Procédé conforme à la revendication 27 ou 28, dans lequel ladite charge renforçante additionnelle est une silice.

30. Procédé conforme à la revendication 29, dans lequel ladite composition élastomère réticulable comprend au moins un agent de couplage de type silane.

31. Procédé conforme à la revendication 30, dans lequel ledit agent de couplage de type silane est choisi parmi les composés de formule générale (XI) suivante :
(R)₃Si-CₐH₂ₐ-X (XI)
dans laquelle
- les symboles R représentent des entités qui peuvent être identiques
ou différentes et qui sont choisies parmi les groupes alkyle, alcoxy et aryloxy et les atomes d'halogène, sous réserve qu'au moins l'un des symboles R représente un groupe alcoxy ou aryloxy ;
- l'indice a est un nombre entier qui vaut de 1 à 6, bornes incluses ;
- et X représente un groupe nitroso, sulfhydryle, amino ou vinyle, un groupe de type époxyde ou imide, un atome de chlore, ou un groupe de formule -(S)ₘCₙH₂-Si(R)₃ où les indices m et n sont des nombres entiers qui valent de 1 à 6, bornes incluses.

32. Pneu comprenant :
- une structure de carcasse de forme sensiblement toroïdale, dont les bords latéraux opposés sont associés chacun, respectivement, à une structure de talon droit et une structure de talon gauche, lesquelles structures de talon comprennent au moins une tringle et au moins un bourrage ;
- une structure de ceinture, placée, vu dans la direction radiale, en position externe par rapport à ladite structure de carcasse ;
- une bande de roulement, disposée, vu dans la direction radiale, pardessus ladite structure de ceinture ;
- une paire de flancs, disposés latéralement sur les côtés opposés de ladite structure de carcasse ;
- et au moins une couche comprenant un matériau élastomère réticulé, placée, vu dans la direction radiale, en situation interne par rapport à ladite structure de carcasse ;
**caractérisé en ce que** ledit matériau élastomère réticulé a été obtenu par réticulation d'une composition élastomère réticulable comprenant au moins un polymère élastomère vulcanisable au soufre et au moins un composé de formule générale (I), tel que défini dans l'une des revendications 1 et 21 à 26.

33. Pneu conforme à la revendication 32, dans lequel ledit polymère élastomère vulcanisable au soufre est tel que défini dans l'une des revendications 7 à 18.

34. Pneu conforme à la revendication 32 ou 33, dans lequel ladite composition élastomère réticulable comprend au moins un copolymère élastomère dérivé d'éthylène et d'au moins une α-oléfine, et en option, d'un diène, tel que défini dans la revendication 20.

35. Pneu conforme à l'une des revendications 32 à 34, dans lequel ledit composé de formule générale (I) est tel que défini dans l'une des revendications 21 à 26.

36. Pneu conforme à l'une des revendications 32 à 35, dans lequel ladite composition élastomère réticulable comprend au moins une charge renforçante additionnelle en une proportion de 0 à 120 pce.

37. Pneu conforme à la revendication 36, dans lequel ladite composition élastomère réticulable comprend au moins une charge renforçante additionnelle en une proportion de 20 à 90 pce.

38. Pneu conforme à la revendication 36 ou 37, dans lequel ladite charge renforçante additionnelle est une silice.

39. Pneu conforme à la revendication 38, dans lequel ladite composition élastomère réticulable comprend au moins un agent de couplage de type silane, tel que défini dans la revendication 31.

40. Composition élastomère réticulable comprenant :
- au moins un caoutchouc butyl, en une proportion supérieure ou égale à 10 pce ;
- au moins un polymère élastomère dérivé de diène(s), en une proportion inférieure ou égale à 90 pce ;
**caractérisée en ce qu'**elle comprend en outre :
- au moins un composé de formule générale (I), tel que défini dans l'une des revendications 1 et 21 à 26, en une proportion de 0,3 à 3,0 pce.

41. Composition élastomère réticulable conforme à la revendication 40, dans laquelle ledit caoutchouc butyl se trouve en une proportion de 50 à 100 pce.

42. Composition élastomère réticulable conforme à la revendication 40 ou 41, dans laquelle ledit polymère élastomère dérivé de diène(s) se trouve en une proportion de 0 à 50 pce.

43. Composition élastomère réticulable conforme à l'une des revendications 40 à 42, dans laquelle ledit composé de formule générale (I) se trouve en une proportion de 0,5 à 1,5 pce.

44. Composition élastomère réticulable conforme à l'une des revendications 40 à 43, dans laquelle ledit polymère élastomère vulcanisable au soufre est tel que défini dans l'une des revendications 7 à 18.

45. Composition élastomère réticulable conforme à l'une des revendications 40 à 44, laquelle composition élastomère réticulable comprend au moins un copolymère élastomère dérivé d'éthylène et d'au moins une α-oléfine, et en option, d'un diène, tel que défini dans la revendication 20.

46. Composition élastomère réticulable conforme à l'une des revendications 40 à 45, dans laquelle ledit composé de formule générale (I) est tel que défini dans l'une des revendications 21 à 26.

47. Composition élastomère réticulable conforme à l'une des revendications 40 à 46, laquelle composition élastomère réticulable comprend au moins une charge renforçante additionnelle en une proportion de 0 à 120 pce.

48. Composition élastomère réticulable conforme à la revendication 47, laquelle composition élastomère réticulable comprend au moins une charge renforçante additionnelle en une proportion de 20 à 90 pce.

49. Composition élastomère réticulable conforme à la revendication 47 ou 48, dans laquelle ladite charge renforçante additionnelle est une silice.

50. Composition élastomère réticulable conforme à la revendication 49, laquelle composition élastomère réticulable comprend au moins un agent de couplage de type silane, tel que défini dans la revendication 31.

51. Pièce manufacturée réticulée, **caractérisée en ce qu'**on l'a obtenue par réticulation d'une composition élastomère réticulable conforme à l'une des revendications 40 à 50.
